(19)

Europäisches Patentamt

European Patent Office

Office européen des brevets

(11)    **EP 2 922 021 A1**

(12)    **EUROPEAN PATENT APPLICATION**

(43) Date of publication:
**23.09.2015  Bulletin 2015/39**

(51) Int Cl.:
**G06T 5/00** *(2006.01)*

(21) Application number: **15158383.8**

(22) Date of filing: **10.03.2015**

<table>
<tr>
<td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.03.2014  GB 201404969**

(71) Applicant: **Nokia Technologies OY 02610 Espoo (FI)**

</td>
<td>

(72) Inventors:
• **Hannuksela, Miska 33610 Tampere (FI)**
• **Aflaki Beni, Payman 33720 Tampere (FI)**

(74) Representative: **Nokia Corporation Intellectual Property Department Karakaari 7 02610 Espoo (FI)**

</td>
</tr>
</table>

(54)    **Method, apparatus and computer program product for filtering of media content**

(57)    In an example embodiment, a method, apparatus and computer program product are provided. The method includes defining a plurality of depth layers of a depth map. At least one depth layer of the plurality of depth layers is associated with a respective depth limit. The method further includes determining, for the at least one depth layer, a respective texture view layer of a first picture. The method further includes deriving a measure of a respective texture property for the respective texture view layer. Selective filtering is applied to the respective texture view layer based on the measure of the respective texture property and the respective depth limit associated with the at least one depth layer.

| Define a plurality of depth layers of a depth map, at least one depth layer of the plurality of depth layers being associated with a respective depth limit | 602 |
|---|---|
| Determine, for the at least one depth layer, a respective texture view layer of a first texture picture | 604 |
| Derive, for the respective texture view layer, a measure of respective texture property | 606 |
| Apply selective filtering to the respective texture view layer based on the measure of the respective texture property and the respective depth limit associated with the at least one depth layer | 608 |

FIGURE 6

600

EP 2 922 021 A1

**Description**

## TECHNICAL FIELD

Various implementations relate generally to method, apparatus, and computer program product for filtering of media content.

## BACKGROUND

Various electronic devices, for example, cameras, mobile phones, and other multimedia devices are widely used for capturing media content and post-capture processing of the media content. Some of these devices also facilitate availability of 3 dimensional (3D) video content post-capturing. Recent advances in the digital video coding have enabled adoption of 3D video content in personal communications such as capturing and sharing of personal 3D video content and/or the video content available online (e.g., internet resources). The 3D video content may be represented by a pair of 2D video signals. The pair of 2D video signals represents different views of the same scene such that the pair of 2D video signals gives a perception of depth associated with the scene. The 3D video content is becoming increasingly popular because of the real-life like experience gained by the user. However, the 3D video content is associated with a high bitrate, and the broadcast of 3D video content poses a challenge due to limited bandwidth capacity of the broadcasting infrastructures.

## SUMMARY OF SOME EMBODIMENTS

Various aspects of examples embodiments are set out in the claims.

In a first aspect, there is provided a method comprising: defining a plurality of depth layers of a depth map, at least one depth layer of the plurality of depth layers being associated with a respective depth limit; determining, for the at least one depth layer, a respective texture view layer of a first texture picture; deriving, for the respective texture view layer, a measure of a respective texture property; and applying selective filtering to the respective texture view layer based on the measure of the respective texture property and the respective depth limit associated with the at least one depth layer.

In a second aspect, there is provided an apparatus comprising: at least one processor; and at least one memory comprising computer program code, the at least one memory and the computer program code configured to, with the at least one processor, cause the apparatus to perform at least: define a plurality of depth layers of a depth map, at least one depth layer of the plurality of depth layers being associated with a respective depth limit; determine, for the at least one depth layer, a respective texture view layer of a first texture picture; deriving, for the respective texture view layer, a measure of respective texture property associated with the at least one depth layer; and apply selective filtering to the respective texture view layer based on the measure of the respective texture property and the respective depth limit associated with the at least one depth layer.

In a third aspect, there is provided a computer program product comprising at least one computer-readable storage medium, the computer-readable storage medium comprising a set of instructions, which, when executed by one or more processors, cause an apparatus to at least perform: define a plurality of depth layers of a depth map, at least one depth layer of the plurality of depth layers being associated with a respective depth limit; determine, for the at least one depth layer, a respective texture view layer of a first texture picture; derive, for the respective texture view layer comprising a measure of the respective texture property associated with the at least one depth layer; and apply selective filtering to the respective texture view layer based on the measure of the respective texture property and the respective depth limit associated with the at least one depth layer.

In a fourth aspect, there is provided an apparatus comprising: means for defining a plurality of depth layers of a depth map, at least one depth layer of the plurality of depth layers being associated with a respective depth limit; means for determining, for the at least one depth layer, a respective texture view layer of a first texture picture; deriving, for the respective texture view layer comprising a respective measure of the texture property associated with the at least one depth layer; and means for applying selective filtering to the respective texture view layer based on the measure of the respective texture property and the respective depth limit associated with the at least one depth layer.

In a fifth aspect, there is provided a computer program comprising program instructions which when executed by an apparatus, cause the apparatus to: define a plurality of depth layers of a depth map, at least one depth layer of the plurality of depth layers being associated with a respective depth limit; determine, for the at least one depth layer, a respective texture view layer of a first texture picture; derive, for the respective texture view layer comprising, a respective measure of the texture property associated with the at least one depth layer; and apply selective filtering to the respective texture view layer based on the measure of the respective texture property and the respective depth limit associated with the at least one depth layer.

**BRIEF DESCRIPTION OF THE FIGURES**

Various embodiments are illustrated by way of example, and not by way of limitation, in the figures of the accompanying drawings in which:

FIGURE 1A illustrates an example block diagram representation of a system for 3 dimensional video (3DV) rendering, in accordance with an example embodiment;

FIGURE 1B illustrates an example representation of view synthesis in accordance with an example embodiment;

FIGURE 2 illustrates a device, in accordance with an example embodiment;

FIGURE 3 illustrates an apparatus for filtering of media content, in accordance with an example embodiment;

FIGURE 4 illustrates an example representation of depth layers and corresponding texture view layers for a media content, in accordance with an example embodiment;

FIGURE 5 is a graphical representation of an example multimedia communication system within which various embodiments may be implemented;

FIGURE 6 is a flowchart depicting an example method for filtering of media content, in accordance with an example embodiment; and

FIGURE 7 is a flowchart depicting an example method for filtering of media content, in accordance with another example embodiment.

**DETAILED DESCRIPTION**

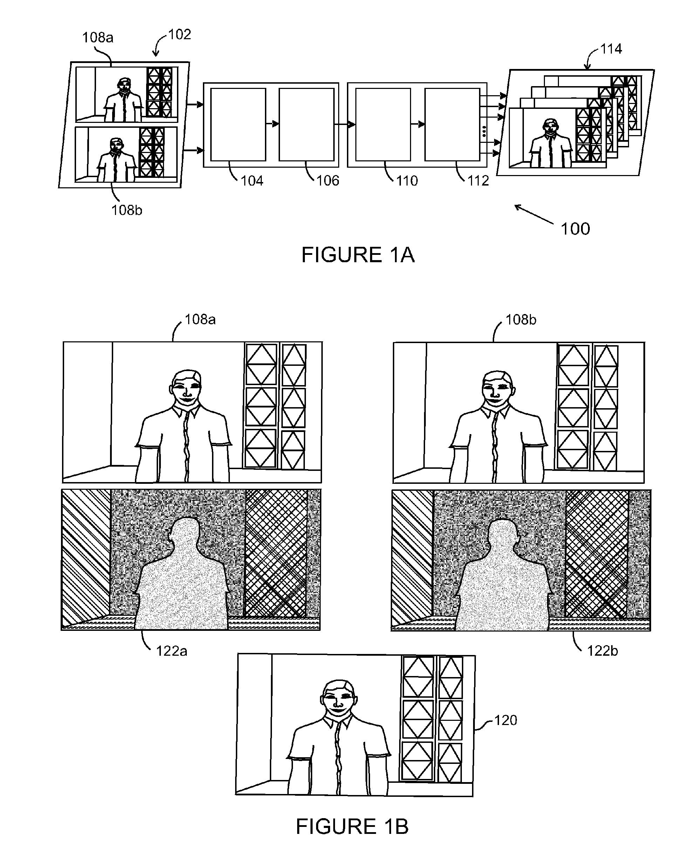

Example embodiments and their potential effects are understood by referring to FIGURES 1A through 7 of the drawings.

Several 3-D video data formats and 3-D video coding strategies are configured to support rendering of 3D video applications. Certain depth enhanced video coding standards facilitate in rendering 3D videos based on the depth. Herein, the term 'depth-enhanced video' refers to texture videos having one or more texture views associated with depth video having one or more depth views. Herein, a 'texture view' may refer to a view that may represent ordinary video content, for example, the video content that may be captured using an ordinary camera, and is usually suitable for rendering on a display. A texture view may typically include pictures having three components or sample arrays, namely, one luma component and two chroma components. In the following description, a texture picture typically includes all its component pictures or color components unless otherwise indicated for example with terms luma texture picture and chroma texture picture. A texture picture may also be referred to as a texture view component.

Ranging information for a particular view represents distance information of a texture sample from the camera sensor, disparity or parallax information between a texture sample and a respective texture sample in another view, or similar information. Ranging information of real-word 3D scene depends on the content and may vary for example from 0 to infinity. Herein, different types of representation of such ranging information can be utilized.

Herein, the term 'depth view' may refer to a view that represents distance information of a texture sample from the camera sensor, disparity or parallax information between a texture sample and a respective texture sample in another view, or similar information. A depth view may include depth pictures (which may be also referred to as depth maps and depth view components) having one component, similar to the luma component of texture views. The other color components, similar to chroma components of texture views, may be absent in the depth views, and may be set to default values (e.g. by an encoder) and/or may be omitted (e.g. by a decoder).

A depth map may be considered to represent the values related to the distance of the surfaces of the scene objects from a reference location, for example a view point of an observer. A depth map is an image that may include per-pixel depth information or any similar information. For example, each sample in a depth map represents the distance of the respective texture sample or samples from the plane on which the camera lies. In other words, if the z axis is along the shooting axis of the cameras (and hence orthogonal to the plane on which the cameras lie), a sample in a depth map represents the value on the z axis.

Since depth maps are generated containing a depth value for each pixel in the image, they can be depicted as gray-level images or images containing only the luma component. Alternatively chroma components of the depth map images may be set to a pre-defined value, such as a value indicating no chromaticity, e.g. 128 in typical 8-bit chroma sample arrays, where a zero chromaticity level is arranged into the middle of the value range. Alternatively, chroma components of depth map images may be used to contain other picture data, such as any type of monochrome auxiliary pictures, such as alpha planes.

The semantics of depth map values may for example include the following:

1. Each luma sample value in a coded depth view component represents an inverse of real-world distance (Z) value, i.e. 1/Z, normalized in the dynamic range of the luma samples, such as to the range of 0 to 255, inclusive, for 8-bit luma representation. The normalization may be done in a manner where the quantization 1/Z is uniform in terms of disparity.

2. Each luma sample value in a coded depth view component represents an inverse of real-world distance (Z) value, i.e. 1/Z, which is mapped to the dynamic range of the luma samples, such as to the range of 0 to 255, inclusive, for 8-bit luma representation, using a mapping function f(1/Z) or table, such as a piece-wise linear mapping. In other words, depth map values result in applying the function f(1/Z).

3. Each luma sample value in a coded depth view component represents a real-world distance (Z) value normalized in the dynamic range of the luma samples, such as to the range of 0 to 255, inclusive, for 8-bit luma representation.

4. Each luma sample value in a coded depth view component represents a disparity or parallax value from the present depth view to another indicated or derived depth view or view position.

The semantics of depth map values may be indicated in the bit-stream, for example, within a video parameter set syntax structure, a sequence parameter set syntax structure, a video usability information syntax structure, a picture parameter set syntax structure, a camera/depth/adaptation parameter set syntax structure, a supplemental enhancement information message, or anything alike.

While phrases such as depth view, depth view component, depth picture and depth map are used to describe various embodiments, it is to be understood that any semantics of depth map values may be used in various embodiments including but not limited to the ones described above. For example, embodiments of the present disclosure may be applied for depth pictures where sample values indicate disparity values. Phrases depth view component and depth picture may be used interchangeably and may have the same semantics in many embodiments.

An encoding system or any other entity creating or modifying a bitstream including coded depth maps may create and include information on the semantics of depth samples and on the quantization scheme of depth samples into the bitstream. Such information on the semantics of depth samples and on the quantization scheme of depth samples may be for example included in a video parameter set structure, in a sequence parameter set structure, or in a supplemental enhancement information (SEI) message.

The multi-view video plus depth (MVD) representation may refer to a set of texture views accompanied with depth maps. One reason to include depth maps is to exploit them in different de(coding) and post processing steps e.g. increase the efficiency of texture view compression or use them in view synthesis. The higher the quality and/or spatial resolution of depth map, the better the quality of virtual rendered views and the less the synthesis artifacts presented in the rendered views. However, in some cases, if the depth map quality and/or resolution is very low, the synthesis artifacts in rendered view might dominate the subjective quality and hence, the rendered view cannot be considered to be viewed to the end user.

In a scheme referred to as unpaired multiview video-plus-depth (MVD), there may be an unequal number of texture views and depth views, and/or some of the texture views might not have a co-located depth view, and/or some of the depth views might not have a co-located texture view, some of the depth view components might not be temporally coinciding with texture view components or vice versa, co-located texture and depth views might cover a different spatial area, and/or there may be more than one type of depth view components. Encoding, decoding, and/or processing of unpaired MVD signal may be facilitated by a depth-enhanced video coding, decoding, and/or processing scheme.

Terms co-located, collocated, and overlapping may be used interchangeably to indicate that a certain sample or area in a texture view component represents the same physical objects or fragments of a 3D scene as a certain co-located/collocated/overlapping sample or area in a depth view component. Different cases of sampling grid alignment between a texture view component and a depth view component are presented in the following:

- In some cases, the sampling grid of a texture view component may be the same as the sampling grid of a depth view component, i.e. one sample of a component image, such as a luma image, of a texture view component corresponds to one sample of a depth view component, i.e. the physical dimensions of a sample match between a component image, such as a luma image, of a texture view component and the corresponding depth view component.

- In some cases, sample dimensions ($t_{width} \times t_{height}$) of a sampling grid of a component image, such as a luma image, of a texture view component may be an integer multiple of sample dimensions ($t_{width} \times d_{height}$) of a sampling grid of a depth view component, i.e. $t_{width} = m \times d_{width}$ and $t_{height} = n \times d_{height}$, where m and n are positive integers. In some embodiments, $d_{width} = m \times t_{width}$ and $d_{height} = n \times t_{height}$, where m and n are positive integers.

- In some cases, $t_{width} = m \times d_{width}$ and $t_{height} = n \times d_{height}$ or alternatively $d_{width} = m \times t_{width}$ and $d_{height} = n \times t_{height}$, where m and n are positive values and may be non-integer. In these cases, an interpolation scheme may be used in the encoder and in the decoder and in the view synthesis process and other processes to derive co-located sample values between texture and depth.

- In some cases, the physical position of a sampling grid of a component image, such as a luma image of a texture view component may match that of the corresponding depth view and the sample dimensions of a component image, such as a luma image of the texture view component may be an integer multiple of sample dimensions ($t_{width} \times d_{height}$) of a sampling grid of the depth view component (or vice versa) - then, the texture view component and the depth view component may be considered to be co-located and represent the same viewpoint.

- In some cases, the position of a sampling grid of a component image, such as a luma image, of a texture view component may have an integer-sample offset relative to the sampling grid position of a depth view component, or vice versa. In other words, a top-left sample of a sampling grid of a component image, such as a luma image, of a texture view component may correspond to the sample at position (x, y) in the sampling grid of a depth view component, or vice versa, where x and y are non-negative integers in a two-dimensional Cartesian coordinate system with non-negative values only in the top-left corner. In some cases, the values of x and/or y may be non-integer and consequently an interpolation scheme may be used in the encoder and in the decoder and in the view synthesis process and other processes to derive co-located sample values between texture and depth.

- In some cases, the sampling grid of a component image, such as a luma image, of a texture view component may have unequal extents compared to those of the sampling grid of a depth view component. In other words, the number of samples in horizontal and/or vertical direction in a sampling grid of a component image, such as a luma image, of a texture view component may differ from the number of samples in horizontal and/or vertical direction, respectively, in a sampling grid of a depth view component and/or the physical width and/or height of a sampling grid of a component image, such as a luma image, of a texture view component may differ from the physical width and/or height, respectively, of a sampling grid of a depth view component.

- In some cases, non-uniform and/or non-matching sample grids can be utilized for texture and/or depth component. A sample grid of depth view component is non-matching with the sample grid of a texture view component when the sampling grid of a component image, such as a luma image, of the texture view component is not an integer multiple of sample dimensions ($t_{width} \times d_{height}$) of a sampling grid of the depth view component or the sampling grid position of a component image, such as a luma image, of the texture view component has a non-integer offset compared to the sampling grid position of the depth view component or the sampling grids of the depth view component and the texture view component are not aligned/rectified. This may happen for example on purpose to reduce redundancy of data in one of the components or due to inaccuracy of the calibration/rectification process between a depth sensor and a color image sensor.

A number of approaches may be used for coding of depth-enhanced video, including the use of auxiliary depth map video streams, multi-view video plus depth (MVD), and layered depth video (LDV). The depth map video stream for a single view may be regarded as a regular monochromatic video stream and coded with any video codec. The essential characteristics of the depth map stream, such as the minimum and maximum depth in world coordinates, can be indicated, for example, in messages formatted according to the MPEG-C Part 3 standard. In the video plus depth (V+D) representation, the depth picture sequence may be coded independently with any video codec, such as the Advanced Video Coding standard (H.264/AVC), or included as auxiliary pictures within the same video bit-stream as the texture video. In the MVD representation, the depth picture sequence for each texture view is coded with any video codec, such as the Multiview Video Coding extension (MVC) of H.264/AVC. In the layered depth video (LDV) representation, the texture and depth of the central view are coded conventionally, while the texture and depth of the other views are partially represented and cover only the dis-occluded areas required for correct view synthesis of intermediate views.

Depth-enhanced video may be coded in a mannerwhere texture and depth are coded independent of each other. For example, texture views may be coded as one MVC bitstream and depth views may be coded as another MVC bitstream. Depth-enhanced video may also be coded in a manner where texture and depth views are jointly coded. In a form of a joint coding of texture and depth views, some decoded samples of a texture picture or data elements for decoding of a texture picture are predicted or derived from some decoded samples of a depth picture or data elements obtained in the decoding process of a depth picture. Alternatively or in addition, some decoded samples of a depth picture or data elements for decoding of a depth picture are predicted or derived from some decoded samples of a texture picture or data elements obtained in the decoding process of a texture picture. In another option, coded video data of texture and coded video data of depth are not predicted from each other or one is not coded/decoded on the basis of the other one, but coded texture and depth view may be multiplexed into the same bitstream in the encoding and demultiplexed from the bitstream in the decoding. In yet another option, while coded video data of texture is not predicted from coded video data of depth in e.g. below slice layer, some of the high-level coding structures of texture views and depth views may be shared or predicted from each other. For example, a slice header of coded depth slice may be predicted from a slice header of a coded texture slice. Moreover, some of the parameter sets may be used by both coded texture views and coded depth views.

A system for 3D video rendering is illustrated and explained with reference to FIGURE 1A. The detailed operation of view synthesis algorithms depend on which representation format has been used for texture views and depth picture sequences. An example representation of view synthesis is illustrated and explained with reference to FIGURE 1B.

FIGURE 1A illustrates an example block diagram representation of a system for 3D video (3DV) rendering, in accordance with an example embodiment. In an embodiment, the 3DV system 100 is based on the use of depth enhanced multi-view video plus depth (MVD) format. As used herein, MVD refers to a set of texture views accompanied with per-pixel depth map components. The depth maps are included along with the set of texture views so as to exploit the depth information contained in the depth map in different de(coding) and post processing steps such as increasing the efficiency of texture view compression, utilization in view synthesis, and the like. A higher quality of depth map facilities in improving the quality of virtual rendered views, thereby reduction in the synthesis artifacts presented in the rendered views. However, in certain scenarios, if the depth map quality is very low, the synthesis artifacts in rendered view might dominate the subjective quality and hence, the rendered view cannot be considered to be viewed to the end user.

As illustrated in FIGURE 1A, the system 100 may include a sending side and a receiving side. The sending side is configured to generate an encoded media content and send the encoded media content to the receiving side. The receiving side is configured to decode the encoded media content and present the decoded media content, for example on a display device.

In an example embodiment, the sending side may include an input device 102, for example a camera, a processor 104, and an encoder 106. In an embodiment, the camera is configured to capture the media content. In an example embodiment, the camera 102 may be configured to capture multiple views of a scene. For example, the camera 102 may capture view images 108a and 108b of a scene, as illustrated in FIGURE 1A. In an embodiment, the camera 102 may be configured to provide the captured media content to the processor 104. The processor 104 may be configured to determine depth information associated with the scene based on the captured view images of the scene, and provide the same to the encoder 106. The encoder 106 is configured to encode multiple view images based at least on the depth information received from the processor 104, and generate a bit stream which can be decoded at the receiving side. The encoder 106 is further configured to transmit the bit stream comprising the encoded video content to the receiving side of the system 100.

In an example embodiment, the receiving side includes a decoder 110 and a view synthesis device 112. In an example embodiment, the decoder 110 is configured to decode the encoded media content (or the bit stream) received from the sending side. The bit stream includes color and depth data corresponding to the view images. The decoder 110 may provide the decoded media content to the view synthesis device 112. The view synthesis device 112 may be configured to generate multiple views, for example views 114 for an autostereoscopic multiview display within a given range across the transmitted view images. In an embodiment, the MVD format enables depth-image-based rendering (DIBR) or view synthesis of additional viewpoints in the decoding side and hence helps in advanced application scenarios. An example representation of view synthesis is illustrated and explained with reference to FIGURE 1B.

View synthesis or DIBR may be used for example for but is not limited to one of more of usages:

- DIBR enables disparity adjustment between the two views displayed on a conventional stereoscopic display. The disparity adjustment may be regarded as an adjustment of the amount of perceived depth in the video content. The disparity adjustment may be performed manually, as controlled by a user. Additionally or alternatively, the disparity adjustment may be performed on the basis of detected or expected distance of the viewer(s) from the display and/or the known display width.
- Multiview auto-stereoscopic displays require even several tens of views to be displayed. DIBR enables generation of intermediate views for auto-stereoscopic displays.
- In some interactive applications a user can select a viewpoint to the multiview content. For example, head and/or gaze tracking may be used to detect user's head position and/or gaze direction and select a view to be displayed accordingly. DIBR enables generation of a desired viewpoint and/or view direction.

FIGURE 1B illustrates an example representation of view synthesis in accordance with an example embodiment. Herein, the term 'view synthesis' or Depth-image-based rendering (DIBR) refers to generation of a novel view based on one or more existing/received views. For example, as illustrated in FIGURE 1A, a left view 108a and a right view image 108b of a scene are represented. Now, after performing view synthesis by, for example, the view synthesis device 112, a novel image, for example an image 120 of the scene may be generated that may include objects of the scene being viewed from a new view-point.

In an embodiment, depth images may be utilized to assist in correct synthesis of the virtual views. Although differing in details, most of the view synthesis algorithms utilize 3D warping based on explicit geometry, i.e., depth images, where each texture pixel is associated with a depth pixel indicating the distance or the z-value from the camera to the physical object from which the texture pixel was sampled. In an embodiment, the distance of the depth pixels from the camera may be represented by a depth map. In particular, the depth map presents the values related to the distance of the surfaces of the scene objects from the view point of observer/camera. Since depth maps are generated containing a depth value for each pixel in the image, the depth maps can be depicted as gray-level images. Referring to FIGURE 1B, depth maps 122a, 122b corresponding to view images 108a, 108b are illustrated. Herein, the depth of different surfaces and objects located at different depths in the scene are represented by varying shadings thereof for the brevity of the description. However, such a representation must not be considered as limiting to the disclosure.

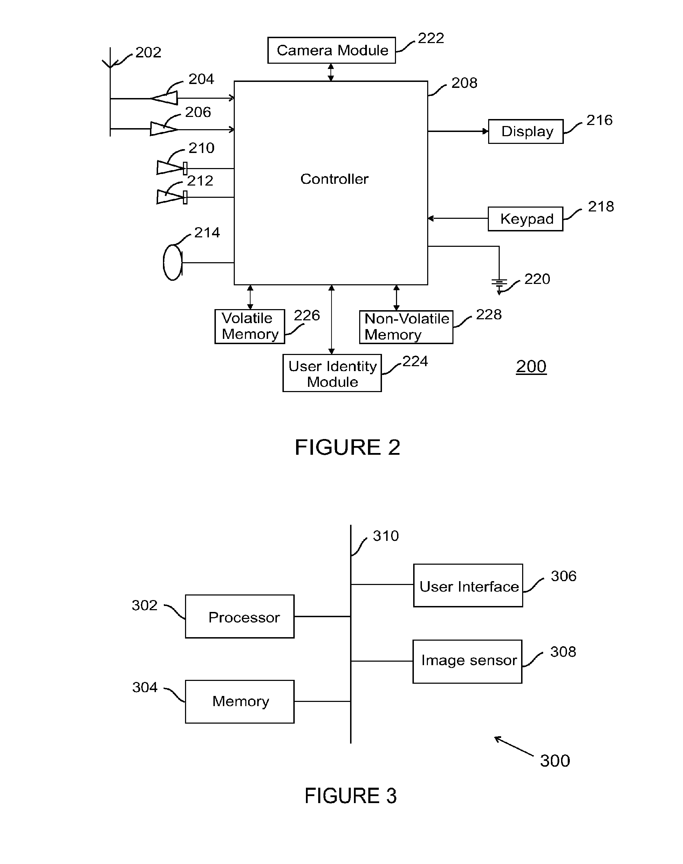

Depth maps may many times be considered approximately piecewise planar, with highly homogeneous regions separated by strong contours. As a result, by preserving more contours, the possibility of exploiting depth map for virtual view synthesis issues may be increased. Moreover, codecs should be capable of compressing the depth-enhanced multi-view content with increased efficiency so as to enable reduction of required bitrate. Various embodiments disclose methods and apparatus that facilitate in compression and transfer of depth-enhanced multi-view content with increased efficiency. In various example embodiments, methods and apparatus are provided that facilitate in preserving the quality of foreground portion of the media content while removing certain details of the background portion, thereby facilitating lower coding bitrate without sacrificing the subjective quality of the media content. An example 3DV system for coding of the video content is explained further in detail with reference to FIGURE 2.

FIGURE 2 illustrates an example device 200, in accordance with an example embodiment. It should be understood, however, that the device 200 as illustrated and hereinafter described is merely illustrative of one type of device that may benefit from various embodiments, therefore, should not be taken to limit the scope of the embodiments. As such, it should be appreciated that at least some of the components described below in connection with the device 200 may be optional and thus in an example embodiment may include more, less or different components than those described in connection with the example embodiment of FIGURE 2. The device 200 could be any of a number of types of mobile electronic devices, for example, portable digital assistants (PDAs), pagers, mobile televisions, gaming devices, cellular phones, all types of computers (for example, laptops, mobile computers or desktops), cameras, audio/video players, radios, global positioning system (GPS) devices, media players, mobile digital assistants, or any combination of the aforementioned, and other types of communications devices.

The device 200 may include an antenna 202 (or multiple antennas) in operable communication with a transmitter 204 and a receiver 206. The device 200 may further include an apparatus, such as a controller 208 or other processing device that provides signals to and receives signals from the transmitter 204 and receiver 206, respectively. The signals may include signaling information in accordance with the air interface standard of the applicable cellular system, and/or may also include data corresponding to user speech, received data and/or user generated data. In this regard, the device 200 may be capable of operating with one or more air interface standards, communication protocols, modulation types, and access types. By way of illustration, the device 200 may be capable of operating in accordance with any of a number of first, second, third and/or fourth-generation communication protocols or the like. For example, the device 200 may be capable of operating in accordance with second-generation (2G) wireless communication protocols IS-136 (time division multiple access (TDMA)), GSM (global system for mobile communication), and IS-95 (code division multiple access (CDMA)), or with third-generation (3G) wireless communication protocols, such as Universal Mobile Telecommunications System (UMTS), CDMA1000, wideband CDMA (WCDMA) and time division-synchronous CDMA (TD-SCDMA), with 3.9G wireless communication protocol such as evolved- universal terrestrial radio access network (E-UTRAN), with fourth-generation (4G) wireless communication protocols, or the like. As an alternative (or additionally), the device 200 may be capable of operating in accordance with non-cellular communication mechanisms. For example, computer networks such as the Internet, local area network, wide area networks, and the like; short range wireless communication networks such as include Bluetooth® networks, Zigbee® networks, Institute of Electric and Electronic Engineers (IEEE) 802.11x networks, and the like; wireline telecommunication networks such as public switched telephone network (PSTN).

The controller 208 may include circuitry implementing, among others, audio and logic functions of the device 200. For example, the controller 208 may include, but are not limited to, one or more digital signal processor devices, one or more microprocessor devices, one or more processor(s) with accompanying digital signal processor(s), one or more processor(s) without accompanying digital signal processor(s), one or more special-purpose computer chips, one or more field-programmable gate arrays (FPGAs), one or more controllers, one or more application-specific integrated circuits (ASICs), one or more computer(s), various analog to digital converters, digital to analog converters, and/or other support circuits. Control and signal processing functions of the device 200 are allocated between these devices according to their respective capabilities. The controller 208 thus may also include the functionality to convolutionally encode and interleave message and data prior to modulation and transmission. The controller 208 may additionally include an internal voice coder, and may include an internal data modem. Further, the controller 208 may include functionality to operate one or more software programs, which may be stored in a memory. For example, the controller 208 may be capable of operating a connectivity program, such as a conventional Web browser. The connectivity program may then allow the device 200 to transmit and receive Web content, such as location-based content and/or other web page content, according to a Wireless Application Protocol (WAP), Hypertext Transfer Protocol (HTTP) and/or the like. In an example embodiment, the controller 208 may be embodied as a multi-core processor such as a dual or quad core processor. However, any number of processors may be included in the controller 208.

The device 200 may also comprise a user interface including an output device such as a ringer 210, an earphone or speaker 212, a microphone 214, a display 216, and a user input interface, which may be coupled to the controller 208. The user input interface, which allows the device 200 to receive data, may include any of a number of devices allowing the device 200 to receive data, such as a keypad 218, a touch display, a microphone or other input device. In embodiments including the keypad 218, the keypad 218 may include numeric (0-9) and related keys (#, *), and other hard and soft keys used for operating the device 200. Alternatively or additionally, the keypad 218 may include a conventional QWERTY keypad arrangement. The keypad 218 may also include various soft keys with associated functions. In addition, or alternatively, the device 200 may include an interface device such as a joystick or other user input interface. The device 200 further includes a battery 220, such as a vibrating battery pack, for powering various circuits that are used to operate the device 200, as well as optionally providing mechanical vibration as a detectable output.

In an example embodiment, the device 200 includes a media capturing element, such as a camera, video and/or audio module, in communication with the controller 208. The media capturing element may be any means for capturing an image, video and/or audio for storage, display or transmission. In an example embodiment in which the media capturing element is a camera module 222, the camera module 222 may include a digital camera capable of forming a digital image file from a captured image. As such, the camera module 222 includes all hardware, such as a lens or other optical component(s), and software for creating a digital image file from a captured image. Alternatively, the camera module 222 may include the hardware needed to view an image, while a memory device of the device 200 stores instructions for execution by the controller 208 in the form of software to create a digital image file from a captured image. In an example embodiment, the camera module 222 may further include a processing element such as a co-processor, which assists the controller 208 in processing image data and an encoder and/or decoder for compressing and/or decompressing image data. The encoder and/or decoder may encode and/or decode according to a JPEG standard format or another like format. For video, the encoder and/or decoder may employ any of a plurality of standard formats such as, for example, standards associated with H.261, H.262/ MPEG-2, H.263, H.264/AVC (i.e. ITU-T Recommendation H.264, which is technically identical to ISO/IEC International Standard 14496-10, i.e. MPEG-4 Part 10), MPEG-4 Visual (i.e. MPEG-4 Part 2), H.265/HEVC and the like. In some cases, the camera module 222 may provide live image data to the display 216. Moreover, in an example embodiment, the display 216 may be located on one side of the device 200 and the camera module 222 may include a lens positioned on the opposite side of the device 200 with respect to the display 216 to enable the camera module 222 to capture images on one side of the device 200 and present a view of such images to the user positioned on the other side of the device 200.

The device 200 may further include a user identity module (UIM) 224. The UIM 224 may be a memory device having a processor built in. The UIM 224 may include, for example, a subscriber identity module (SIM), a universal integrated circuit card (UICC), a universal subscriber identity module (USIM), a removable user identity module (R-UIM), or any other smart card. The UIM 224 typically stores information elements related to a mobile subscriber. In addition to the UIM 224, the device 200 may be equipped with memory. For example, the device 200 may include volatile memory 226, such as volatile random access memory (RAM) including a cache area for the temporary storage of data. The device 200 may also include other non-volatile memory 228, which may be embedded and/or may be removable. The non-volatile memory 228 may additionally or alternatively comprise an electrically erasable programmable read only memory (EEPROM), flash memory, hard drive, or the like. The memories may store any number of pieces of information, and data, used by the device 200 to implement the functions of the device 200.

FIGURE 3 illustrates an apparatus 300 for filtering of media content, in accordance with an example embodiment. The apparatus 300 may be employed, for example, in the device 200 of FIGURE 2. However, it should be noted that the apparatus 300, may also be employed on a variety of other devices both mobile and fixed, and therefore, embodiments should not be limited to application on devices such as the device 200 of FIGURE 2. Alternatively, embodiments may be employed on a combination of devices including, for example, those listed above. Accordingly, various embodiments may be embodied wholly at a single device, for example, the device 200 or in a combination of devices. Furthermore, it should be noted that the devices or elements described below may not be mandatory and thus some may be omitted in certain embodiments.

The apparatus 300 includes or otherwise is in communication with at least one processor 302 and at least one memory 304. Examples of the at least one memory 304 include, but are not limited to, volatile and/or non-volatile memories. Some examples of the volatile memory include, but are not limited to, random access memory, dynamic random access memory, static random access memory, and the like. Some examples of the non-volatile memory include, but are not limited to, hard disks, magnetic tapes, optical disks, programmable read only memory, erasable programmable read only memory, electrically erasable programmable read only memory, flash memory, and the like. The memory 304 may be configured to store information, data, applications, instructions or the like for enabling the apparatus 300 to carry out various functions in accordance with various example embodiments. For example, the memory 304 may be configured to buffer input data comprising media content for processing by the processor 302. Additionally or alternatively, the memory 304 may be configured to store instructions for execution by the processor 302.

An example of the processor 302 may include the controller 208. The processor 302 may be embodied in a number of different ways. The processor 302 may be embodied as a multi-core processor, a single core processor; or combination of multi-core processors and single core processors. For example, the processor 302 may be embodied as one or more of various processing means such as a coprocessor, a microprocessor, a controller, a digital signal processor (DSP), processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the multi-core processor may be configured to execute instructions stored in the memory 304 or otherwise accessible to the processor 302. Alternatively or additionally, the processor 302 may be configured to execute hard coded functionality. As such, whether configured by hardware or software methods, or by a combination thereof, the processor 302 may represent an entity, for example, physically embodied in circuitry, capable of performing operations according to various embodiments while configured accordingly. For example, if the processor 302 is embodied as two or more of an ASIC, FPGA or the like, the processor 302 may be specifically configured hardware for conducting the operations described herein. Alternatively, as another example, if the processor 302 is embodied as an executor of software instructions, the instructions may specifically configure the processor 302 to perform the algorithms and/or operations described herein when the instructions are executed. However, in some cases, the processor 302 may be a processor of a specific device, for example, a mobile terminal or network device adapted for employing embodiments by further configuration of the processor 302 by instructions for performing the algorithms and/or operations described herein. The processor 302 may include, among other things, a clock, an arithmetic logic unit (ALU) and logic gates configured to support operation of the processor 302.

A user interface 306 may be in communication with the processor 302. Examples of the user interface 306 include, but are not limited to, input interface and/or output interface. The input interface is configured to receive an indication of a user input. The output user interface provides an audible, visual, mechanical or other output and/or feedback to the user. Examples of the input interface may include, but are not limited to, a keyboard, a mouse, a joystick, a keypad, a touch screen, soft keys, and the like. Examples of the output interface may include, but are not limited to, a display such as light emitting diode display, thin-film transistor (TFT) display, liquid crystal displays, active-matrix organic light-emitting diode (AMOLED) display, a microphone, a speaker, ringers, vibrators, and the like. In an example embodiment, the user interface 306 may include, among other devices or elements, any or all of a speaker, a microphone, a display, and a keyboard, touch screen, or the like. In this regard, for example, the processor 302 may comprise user interface circuitry configured to control at least some functions of one or more elements of the user interface 306, such as, for example, a speaker, ringer, microphone, display, and/or the like. The processor 302 and/or user interface circuitry comprising the processor 302 may be configured to control one or more functions of one or more elements of the user interface 206 through computer program instructions, for example, software and/or firmware, stored on a memory, for example, the at least one memory 304, and/or the like, accessible to the processor 302.

In an example embodiment, the apparatus 300 may include an electronic device. Some examples of the electronic device include communication device, media capturing device with or without communication capabilities, computing devices, and the like. Some examples of the electronic device may include a mobile phone, a personal digital assistant (PDA), and the like. Some examples of computing device may include a laptop, a personal computer, and the like. In an example embodiment, the electronic device may include a user interface, for example, the user interface 306, having user interface circuitry and user interface software configured to facilitate a user to control at least one function of the electronic device through use of a display and further configured to respond to user inputs. In an example embodiment, the electronic device may include a display circuitry configured to display at least a portion of the user interface 306 of the electronic device. The display and display circuitry may be configured to facilitate the user to control at least one function of the electronic device.

In an example embodiment, the electronic device may be embodied as to include a transceiver. The transceiver may be any device operating or circuitry operating in accordance with software or otherwise embodied in hardware or a combination of hardware and software. For example, the processor 302 operating under software control, or the processor 302 embodied as an ASIC or FPGA specifically configured to perform the operations described herein, or a combination thereof, thereby configures the apparatus 300 or circuitry to perform the functions of the transceiver. The transceiver may be configured to receive media content. Examples of the media content may include audio content, video content, data, and a combination thereof.

In an example embodiment, the electronic device may be embodied as to include one or more camera, for example a camera represented as image sensor 308. In various example embodiments, the camera 308 may be in communication with the processor 302 and/or other components of the apparatus 300. The camera 308 may be in communication with other imaging circuitries and/or software, and is configured to capture digital images or to make a video or other graphic media files. The camera 308 and other circuitries, in combination, may be an example of at least one camera module such as the camera module 222 of the device 200. In an example embodiment, the camera 308 may include a main lens, a sensor, and a plurality of micro-lenses placed between the main lens and the sensor.

These components (302-308) may communicate to each other via a centralized circuit system 310 to facilitate video encoding. The centralized circuit system 310 may be configured to, among other things, provide or enable communication between the components (302-308) of the apparatus 300. In certain embodiments, the centralized circuit system 310 may be a central printed circuit board (PCB) such as a motherboard, main board, system board, or logic board. The centralized circuit system 310 may also, or alternatively, include other printed circuit assemblies (PCAs) or communication channel media.

In an example embodiment, the processor 302 is configured to, with the content of the memory 304, and optionally with other components described herein, to cause the apparatus 300 to facilitate receipt of a media content associated with a scene. Herein, the 'scene' refers to arrangement (natural, manmade, sorted or assorted) of one or more objects of which the images or videos can be captured, or of which the preview can be generated. In this example embodiment, the plurality of scene may be captured by the camera that may be present in the apparatus 300. In another example embodiment, the apparatus 300 may be caused to send instructions for capturing of a plurality of view images of the scene by an external camera that is accessible/communicably coupled to the apparatus 300. Herein, the camera includes any camera that is capable of capturing image/video data of the scene, such that multiple views of the same scene may be generated. In some example embodiments, the plurality of view images may be prerecorded or stored in an apparatus 300, or may be received from sources external to the apparatus 300. In such example embodiments, the apparatus 300 is caused to receive the plurality of view images from external storage medium such as DVD, Compact Disk (CD), flash drive, memory card, or from external storage locations through Internet, Bluetooth®, and the like. In an example embodiment, a processing means may be configured to facilitate receipt of the plurality of view images of the scene. An example of the processing means may include the processor 302, which may be an example of the controller 208.

In an example embodiment, the apparatus 300 is caused to determine at least one depth map from the plurality of view images. For example, the apparatus 300 may be configured to determine a depth map D from a first view image $I_1$ and a second view image $I_2$ of the plurality of view images. In an example embodiment, the first view image $I_1$ may be a left view image of the scene while the second view image $I_2$ may be a right view image of the scene. In an example embodiment, the view images 108a, 108b (FIGURE 1A) may be examples of the first view image and the second view image, respectively.

In an embodiment, the apparatus 300 is caused to determine the depth map from the first view image and the second view image based on a matching of corresponding pixels of the first view image and the second view image. Herein, the determination of the depth map is explained by considering two images. It will however be noted that a plurality of depth maps may be generated from the plurality of view images received from the camera, for example, the camera 308. For example, the apparatus 300 may be caused to receive view images $I_1$, $I_2$, $I_3$ and $I_4$ (hereinafter referred to as the view images ($I_1$-$I_4$)). The apparatus 300 may further be caused to determine shifts between the images of the plurality of view images, for example view images $I_1$, $I_2$, $I_3$ and $I_4$. In an example embodiment, the shifts between the images ($I_1$-$I_4$) and a reference image may be determined. In an example embodiment, the reference view image may be selected from the plurality of view images ($I_1$-$I_4$). For instance, the view image $I_1$ may be selected as the reference image. In an example embodiment, the corresponding shifts of the view images $I_1$, $I_2$, $I_3$ and $I_4$ may be determined with respect to the view image $I_1$. In an example embodiment, a processing means may be configured to determine shifts between the images of the plurality of view images ($I_1$-$I_4$). An example of the processing means may include the processor 302, which may be an example of the controller 208, and/or the camera 308 including gyroscope.

In an example embodiment, the apparatus 300 is caused to generate a plurality of depth maps for the plurality of view images ($I_1$-$I_4$). In an example embodiment, for each view image, a corresponding depth map is generated. For example, depth maps $d_1$, $d_2$, $d_3$ and $d_4$ may be generated corresponding to the views images $I_1$, $I_2$, $I_3$ and $I_4$, respectively. The depth maps ($d_1$-$d_4$) for the view images ($I_1$-$I_4$) may be generated by many suitable techniques known in art. In an example embodiment, a processing means may be configured to generate the plurality of depth maps for the plurality of images ($I_1$-$I_4$). An example of the processing means may include the processor 302, which may be an example of the controller 208.

In an example embodiment, the depth map may include depth information associated with the scene. The depth information may be obtained by various means. For example, depth of the 3D scene may be computed from the disparity registered by capturing cameras or color image sensors. A depth estimation approach, which may also be referred to as stereo matching, includes taking a stereoscopic view as an input and computing local disparities between the two offset images of the view. Since the two input views represent different viewpoints or perspectives, the parallax creates a disparity between the relative positions of scene points on the imaging planes depending on the distance of the points. A target of stereo matching is to extract those disparities by finding or detecting the corresponding points between the images. Stereo matching may be performed based on various approaches. For example, in a block or template matching approach each image is processed pixel by pixel in overlapping blocks, and for each block of pixels a horizontally localized search for a matching block in the offset image is performed. Once a pixel-wise disparity is computed, the corresponding depth value z may be calculated by the following equation:

$$z = \frac{f \cdot b}{d + \Delta d}$$

where, f is the focal length of the camera and b is the baseline distance between cameras. Further, d may be considered to refer to the disparity observed between the two cameras or the disparity estimated between corresponding pixels in the two cameras. The camera offset $\Delta d$ may be considered to reflect a possible horizontal misplacement of the optical centers of the two cameras or a possible horizontal cropping in the camera frames due to pre-processing. However, since the algorithm is based on block matching, the quality of a depth-through-disparity estimation is content dependent and very often not accurate. For example, no straightforward solution for depth estimation is possible for image fragments that are featuring very smooth areas with no textures or large level of noise.

Alternatively or in addition to the above-described stereo view depth estimation, the depth value may be obtained using the time-of-flight (TOF) principle for example by using a camera which may be provided with a light source, for example an infrared emitter, for illuminating the scene. Such an illuminator may be arranged to produce an intensity modulated electromagnetic emission for a frequency between e.g. 10-100 MHz, which may require LEDs or laser diodes to be used. Infrared light may be used to make the illumination unobtrusive. The light reflected from objects in the scene is detected by an image sensor, which may be modulated synchronously at the same frequency as the illuminator. The image sensor may be provided with optics; a lens gathering the reflected light and an optical band pass filter for passing only the light with the same wavelength as the illuminator, thus helping to suppress background light. The image sensor may measure for each pixel the time the light has taken to travel from the illuminator to the object and back. The distance to the object may be represented as a phase shift in the illumination modulation, which can be determined from the sampled data simultaneously for each pixel in the scene.

Alternatively or in addition to the above-described stereo view depth estimation and/or TOF-principle depth sensing, depth values may be obtained using a structured light approach which may operate for example approximately as follows. A light emitter, such as an infrared laser emitter or an infrared LED emitter, may emit light that may have a certain direction in a 3D space (e.g. follow a raster-scan or a pseudo-random scanning order) and/or position within an array of light emitters as well as a certain pattern, e.g. a certain wavelength and/or amplitude pattern. The emitted light is reflected back from objects and may be captured using a sensor, such as an infrared image sensor. The image/signals obtained by the sensor may be processed in relation to the direction of the emitted light as well as the pattern of the emitted light to detect a correspondence between the received signal and the direction/position of the emitted lighted as well as the pattern of the emitted light for example using a triangulation principle. From this correspondence a distance and a position of a pixel may be concluded.

It is to be understood that the above-described depth estimation and sensing methods are provided as non-limiting examples and embodiments may be realized with the described or any other depth estimation and sensing methods and apparatuses.

In an embodiment, the apparatus 300 is caused to define a plurality of depth layers of the depth map. In an example embodiment, at least one depth layer of the plurality of depth layers may be associated with a respective depth limit. In an example embodiment, the depth limit associated with a depth layer may pertain to an extent of depth of said layer with respect to a reference location. In an embodiment, a foreground layer of the depth map may include a least value of the depth limit as compared to the values of depth limit associated with the middle-ground layer and the background layers since the pixels corresponding to the foreground layer may be located closest to the camera. Similarly, the middle-ground layer comprises a value of the depth limit that is higher than the corresponding value for the foreground layer but lower than the corresponding value for the background layer, since the pixels corresponding to the middle-ground layer may be located at a farther location as compared to the location of the pixels of the foreground layer, but closer than the location of pixels associated with the background layer when seen from the reference location.

In an embodiment, the reference location may include a location of a camera that is configured to capture the plurality of view images. In an example embodiment, a processing means may be configured to define a plurality of depth layers of the depth map. An example of the processing means may include the processor 302, which may be an example of the controller 208. In an example embodiment, the apparatus 300 may be caused to define the plurality of depth layers of the depth map based on the depth values associated with the portions of the scene. For example, the portions closer to the reference location may be assigned to a depth layer associated with an index 1, while the portions farther away from the reference location may be assigned to subsequent depth layers associated with indices such as 2, 3, and so on.

In an example embodiment, the apparatus 300 may be caused to define the plurality of depth layers by segmenting the depth map into different depth layers based on one or more parameters such as spatial information, temporal redundancy, feature /object extraction techniques, and the like associated with the video content. In an example embodiment, the depth map may be segmented into different depth layers by defining respective depth limits for various depth layers. For example, a depth interval 'D' of the depth map may be divided into N depth layers $D_1, D_2, ... D_N$ based on N-1 threshold depth limits assigned to the N depth layers. In an embodiment, N-1 depth limits (or depth thresholds ($th$)) may be computed, and based on the depth values the depth interval D may be divided into N different depth layers as follows:

$$\text{Depth segment} = \begin{cases} Layer\ 1 & , & D_{i,j} \geq th_1 \\ Layer\ 2 & , & th_1 > D_{i,j} \geq th_2 \\ & . \\ & . & \text{------------(1)} \\ & . \\ Layer\ N & , & th_{N-1} > D_{i,j} \end{cases}$$

where, $D_{i,j}$ presents the depth pixel values at locations with indices $i$ and $j$.

In an example embodiment, the depth limits ($th_{N-1}$) may be generated based on the depth interval of the depth map. In an embodiment, the depth interval (L) may refer to a difference between a maximum value of depth and a minimum level of the depth associated with the depth map. In an example embodiment, the depth interval may be divided into N intervals of size (L/N) each to generate N depth layers. In another example embodiment, instead of dividing the depth interval into N intervals, only a portion of the depth interval less than or equal to a threshold depth interval may be divided into N intervals. For example, in case of teleconferencing application, the depth interval beyond the foreground depth interval may not be considered for division into depth segments.

In an example embodiment, the processor 302 is configured to, with the content of the memory 304, and optionally with other components described herein, to cause the apparatus 300 to determine respective depth limit for the at least one depth layer of the plurality of depth layers based on at least one depth criteria. In an embodiment, the at least one depth criteria includes one or more of a differential value of depth, mean value of depth, median value of depth, and histogram based value of depth associated with the at least one depth layer. In an example embodiment, a processing means may be configured to determine respective depth limit for the at least one depth layer of the plurality of depth layers based on at least on one or more depth criteria. An example of the processing means may include the processor 302, which may be an example of the controller 208.

In an example embodiment, the processor 302 is configured to, with the content of the memory 304, and optionally with other components described herein, to cause the apparatus 300 to generate the respective depth limits for the plurality of depth layers based on the depth criteria associated with the mean depth value associated with the depth map. In an embodiment, the mean depth value may be utilized for partitioning the depth map into multiple depth intervals. In an example embodiment, each of the multiple depth intervals may be uniformly divided into N intervals each to generate N depth layers each. The present embodiment ensures a better distribution of regions based on the content rather than just dividing the whole interval to same sized smaller intervals. In an example embodiment, a processing means may be configured to generate the respective depth limits for the plurality of depth layers based on the depth criteria associated with the mean depth value. An example of the processing means may include the processor 302, which may be an example of the controller 208.

In an example embodiment, the processor 302 is configured to, with the content of the memory 304, and optionally with other components described herein, to cause the apparatus 300 to generate the respective depth limits for the plurality of depth layers based on the depth criteria associated with the median depth value associated with the depth map. In an embodiment, the median depth value may be utilized for dividing the depth map into two depth intervals, and each of the two depth intervals may be uniformly divided into N intervals each to generate N depth segments each. In another example embodiment, instead of dividing the depth interval into N intervals, only a portion of the depth interval less than or equal to a threshold depth interval may be divided into N intervals. In an example embodiment, a processing means may be configured to generate the respective depth limits for the plurality of depth layers based on the depth criteria associated with the median depth value. An example of the processing means may include the processor 302, which may be an example of the controller 208.

In an example embodiment, the processor 302 is configured to, with the content of the memory 304, and optionally with other components described herein, to cause the apparatus 300 to generate the depth thresholds by performing a Histogram-based division. In an example embodiment, a histogram H(x) of the depth map may be generated. The histogram may be representative of a number of pixels associated with a plurality of depth values of the depth map. In an example embodiment, the histogram may be generated such that the x-axis represents the sample depth values and the y-axis represents the number of pixels having the depth values represented in x-axis. In an example embodiment, depth values represented on x-axis may be divided into N contiguous intervals such that the number of pixels in each segment is approximately equal. In the present embodiment, the image is divided to N depth segments where each layer occupies 1/N$^{th}$ of the total area of the image. In another example embodiment, instead of dividing the depth values represented on x-axis into N intervals, only a portion of the depth interval less than or equal to a threshold depth interval may be divided into N intervals. The present embodiment may be advantageous in applications where it is absolutely mandatory to keep the objects close to the camera intact, for example, in video conferencing and defining such depth right behind the depth value for the face of the attendee. In an example embodiment, a processing means may be configured to generate the respective depth limits for the plurality of depth layers based on the depth criteria associated with the Histogram-based division. An example of the processing means may include the processor 302, which may be an example of the controller 208.

In an example embodiment, the depth thresholds may be generated based on a combination of one or more depth criteria describe above, for example, based on a determination of mean depth value, median depth value, histogram-based division of depth interval, and the like.

In an example embodiment, the apparatus 300 may be caused to map the plurality of depth layers to respective texture views, resulting into texture view layers corresponding to depth layers. The mapping may include but is not limited to one or more of the following aspects:

- Samples of a texture picture that represent the same view as and collocate with a depth layer may be determined to form the respective texture view layer. It is remarked that when determining collocation, various possibilities of unpaired MVD may be taken into account as described earlier.
- A depth map may be warped to a viewpoint of a texture picture using DIBR. After that samples of the texture picture that collocate with a depth layer in the warped depth picture may be determined to form the respective texture view layer.

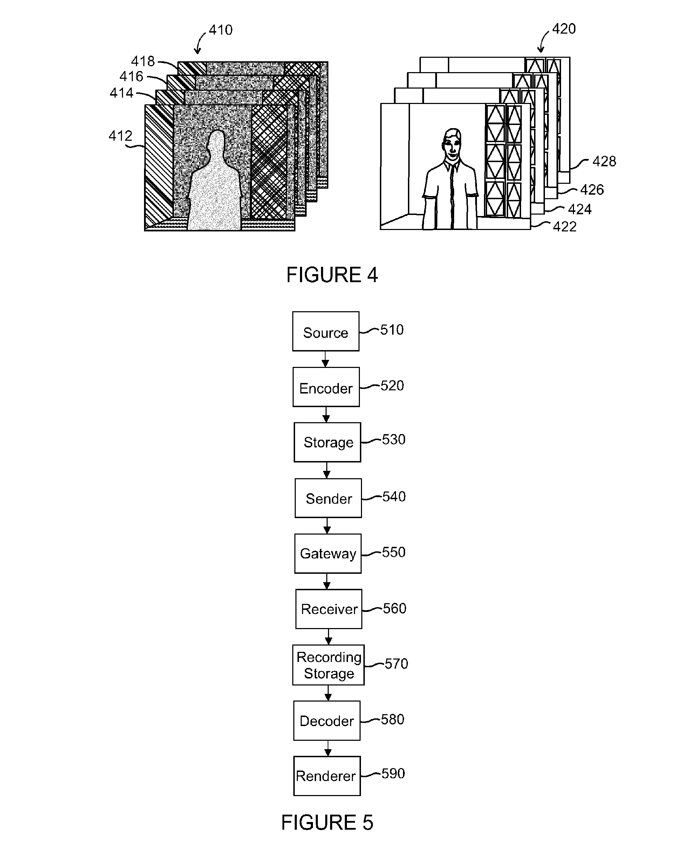

In an example embodiment, the apparatus 300 is caused to generate a plurality of texture view layers corresponding to the plurality of depth segments. For example, for N depth segments the apparatus 300 may be caused to generate N texture view layers. In an example embodiment, the N texture view layers may be generated by partitioning the texture image into N layers corresponding to the N depth layers. An example of the plurality of texture view layers corresponding to the plurality of depth segments is illustrated and explained further with reference to FIGURE 4.

In an example embodiment, the apparatus 300 may be caused to determine a measure of the texture property associated with the plurality of depth layers from the corresponding plurality of texture view layers. In an example embodiment, the measure of the texture property may be derived based on frequency-domain characteristics of the texture view layers. In an example embodiment, high frequency components (HFC) (and/or their properties such as magnitude, count, share or such) may be extracted from one or more texture view layers and hence the measure of the texture property may include the HFCs associated with the respective depth layers. In an embodiment, the measure of the texture property may be generated by transferring sample values of texture information to frequency domain for analysis of content thereof. In an embodiment, the apparatus 300 may be caused to compute a discrete cosine transform (DCT) from samples values of a texture picture, for example the first texture picture and use absolute values of the resulting DCT coefficients as the measure of the texture property. In an embodiment, the apparatus 300 may further be caused to cover the depth layers of the plurality of depth layers with blocks (of size n×n) and calculate the DCT in a block based manner. In an example embodiment, the size of n may be 4, 8, 16, 32, and the like. Blocks and values derived from them may be determined to be associated with a texture view layer, when, according to a first example, at least one pixel of a block is within the texture view layer, or, according to a second example, at least half of the pixels of a block are within the texture view layer. In another example, the derivation of DCT for a texture view layer may exclude pixel values from pixels outside the texture view layer. A fixed block size may be used for the whole image or a combination of different block sizes may be used. The decision on the size of the blocks may be made based on the characteristics of the texture view layer e.g. amount/level of spatial information (SI) in that region. In an example embodiment, for a block$_i$ with size n×n, the DCT may be computed as follows:

$$dct\_values = abs(dct2(block_{i,nxn})) \text{ --------------- (2)}$$

In an example embodiment, the coefficients presenting the high frequency components for each block are mainly located in a lower right corner of the dct2 block, and accordingly, the coefficients corresponding to the HFC may be retrieved from dct_values. In an example embodiment, one quarter of the absolute coefficients located in the right lower part of dct_values may be considered. For example, as shown in equation (3), the high frequency components of the image may be computed from the dct_values as:

13

$$\text{HFC} = \text{average}(\text{absolute}(\text{dct\_values}(\text{block}(i,j)))) \text{ , } i,j \in \{\tfrac{n}{2}, \tfrac{n}{2}+1, \dots, n\} \text{ ------------ (3)}$$

where n represents the block size, and

block(i,j) represents all pixel values at location with indices i and j

In an embodiment, the high frequency components corresponding to each of the plurality of depth segments (N) may be computed, for example as $\text{HFC}_1$, $\text{HFC}_2$, ... , $\text{HFC}_N$ respective to layers (depth segments and/or layers of texture view) 1 to N.

In an embodiment, the apparatus 300 is caused to determine a filter criteria for the plurality of depth layers based on the measure of the respective texture property and the respective depth limit associated with the at least one depth layer. In an example embodiment, the filter criteria for filtering the at least one depth layer may be based on depth information of the at least one depth layer and the measure of the texture property associated with the at least one depth layer. In an example embodiment, the filter criteria may be different for different depth layers. In an example embodiment, a processing means may be configured to determine the filter criteria for the plurality of depth layers. An example of the processing means may include the processor 302, which may be an example of the controller 208.

In an example embodiment, the apparatus 300 is caused to apply selective filtering to the at least one texture view layer based on the filter criteria. In an example embodiment, applying selective filtering to the at least one texture view layer include manipulating a filter strength for performing filtering of the at least one texture view layer based on the filter criteria associated with the at least one texture view layer. For example, on determination of depth of the at least one depth layer (or the respective texture view layer) being greater than a threshold depth, the filter criteria may include increasing filter strength for the at least one texture view layer. In an example embodiment, on determination of a spatial detail level of the texture information associated with the at least one texture view layer to be greater than a threshold level, wherein the determination may comprise obtaining a measure of the respective texture property, such as an amount and/or magnitude of HFCs within the texture view information of the at least one texture view layer, the filter criteria may include decreasing the filter strength for that texture view layer, since if large amount of HFC is available in a texture view layer, the stronger filter may remove greater details thereby decreasing a visual quality of the image. In an example embodiment, a processing means may be configured to apply selective filtering to the at least one texture view layer based on the filter criteria. An example of the processing means may include the processor 302, which may be an example of the controller 208.

In an example embodiment, the selective filtering applied to the distinct texture view layers facilities in lowering the coding bitrate associated with the media content without sacrificing the subjective visual quality. For example, while accessing 3D media content, the quality of objects closer to the viewer are desired to be associated with higher quality as compared to the objects away from the viewer. In this regard, various embodiments of the disclosure facilitates in preserving the quality of the foreground portions of the 3D media content while removing certain details in the background portions.

In an example embodiment, a texture view layer is filtered out to an extent that content within the texture view layer becomes unrecognizable. In other words, the texture view layer may be filtered so heavily that the content cannot be recognized by an end-user but rather the end-user may perceive just a blurry image on what is in the scene. A target application of this approach is to assure user privacy e.g. on video-conference/phone applications where for example some confidential information in the background is not meant to be shared with other participant(s) of that video-conference/phone. The depth layers may be adjusted in a manner that the background is fully covered by a depth layer. There may be two depth layers, one for foreground and another for background, which may be defined based on depth maps. The texture view layer for the foreground may be left unfiltered.

In an embodiment, at least one depth layer of a depth map may be filtered in addition to or instead of filtering at least one texture view layer. Filtering of depth layers and/or texture view layers may be performed as pre-processing for encoding. Filtering parameters for depth layer filtering may be selected similarly to filtering parameters for texture view layer filtering. Depth layer filtering may be for example low-pass filtering. Alternatively, a bilateral filter may be used in which depth edges or discontinuities may be preserved.

In an example embodiment, the apparatus 300 may further be caused to receive a second texture picture such that the first texture picture and the second texture picture may jointly represent a stereoscopic picture. In an example embodiment, the second texture picture may be generated on applying the selective filtering to the respective texture view layer associated with the first texture picture. In an example embodiment, the apparatus 300 may be caused to encode the second texture picture in a base layer of a scalable bitstream. In an example embodiment, the apparatus 300 may be caused to encode the first texture picture in an enhancement layer of the scalable bitstream. In an example embodiment, the apparatus 300 may be caused to decode the encoded second texture picture from the base layer of the scalable bitstream. In an example embodiment, the apparatus 300 may be caused to decode the encoded first texture picture from the enhancement layer of the scalable bitstream. The scalable bit-stream and the encoding and decoding of the first texture picture and the second texture picture are further explained with reference to FIGURE 4.

FIGURE 4 illustrates an example representation of depth layers 410 and corresponding texture view layers 420 for a media content, in accordance with an example embodiment. Herein, a video sequence of a 'person moving in a room' is used for the explanation of depth layers and corresponding texture view layers. It will be noted that the sequence of layers of the texture view and the depth segments illustrated herein are for reference purpose and do not limit the present disclosure.

As already discussed with reference to FIGURE 1B, the multi-view video data includes both texture information as well as depth information. The texture information may describe luminance (brightness or intensity) and chrominance (color, e.g., blue hues and red hues) of the media content, for example, an image. In an example embodiment, the texture information may include measure of one or more texture properties, for example HFCs associated with the texture layers. Depth information represented by a depth map may include individual pixels that may be assigned depth values indicative of position/location of said pictures at which the pixels may be displayed. For example, the depth information may provide information of the depth from a reference location of a pixel at which corresponding pixels of the texture view/image may be displayed on a stereoscopic or autostereoscopic display in such a manner that they appear at the screen level, relatively in front of the screen, or relatively behind the screen.

Referring back to FIGURE 4, the depth layers 410 and the corresponding texture view layers 420 for an image are illustrated. The depth layers 410 of the depth map are shown to include depth layers 412, 414, 416 and 418, respectively. As discussed, filtering of the respective texture view layers may be performed based on the measure of the texture property associated with the respective depth layer. The measure of the texture property associated with the depth layer may be determined based on the corresponding texture view associated with that depth layer. In an embodiment, a texture view of the image may be partitioned into a plurality of texture view layers, for example, the texture view layers 422, 424, 426, and 428 corresponding to the depth layers 412, 414, 416 and 418, respectively. In an embodiment, filtering of the texture view layers 422, 424, 426, and 428, may be performed based on the corresponding texture property measure being determined from the texture view layers 422, 424, 426, and 428, respectively.

In an embodiment, the filtering of texture view layers may be applied for a video signal that represents a single texture view or essentially represents a single texture view with some auxiliary information, e.g. following the LDV data format.

Scalable video coding may be defined to refer to a coding structure where one bitstream can contain multiple representations of the content for example at different bitrates, resolutions and/or frame rates. In these cases the receiver can extract the desired representation depending on its characteristics (e.g. resolution that matches best with the resolution of the display of the device). Alternatively, a server or a network element can extract the portions of the bitstream to be transmitted to the receiver depending on e.g. the network characteristics or processing capabilities of the receiver.

In scalable video coding, a video signal can be encoded into a base layer (BL) and one or more enhancement layers (EL). An enhancement layer may for example enhance the temporal resolution (i.e., the frame rate), the spatial resolution, and/or simply the quality of the video content represented by another layer or part thereof. In order to improve coding efficiency for the enhancement layers, the coded representation of that layer may depend on all or some of the lower layers. For example, the motion and mode information of the enhancement layer can be predicted from lower layers. Similarly the pixel data of the lower layers can be used to create prediction for the enhancement layer(s).

Each layer together with all its dependent layers may be considered to be one representation of the video signal for example at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

In an embodiment, a first picture is filtered as described in various other embodiments on the basis of the obtained texture view layers, and the filtering may result into a second picture. The second picture is encoded in a base layer of a scalable video (or image) bitstream, and the first picture is encoded in an enhancement layer of the scalable video (or image) bitstream. Likewise, a second picture may be decoded from a base layer of a scalable bitstream, the second picture representing a picture where some texture view layers have been filtered, and the first picture may be decoded from the enhancement layer of the scalable bitstream. Prediction may be applied from the second picture to the first picture as part of the encoding and/or the decoding. For example, the (reconstructed) second picture may be included in a reference picture list of the first picture and may be used as a reference picture in the inter prediction process.

In an embodiment, the filtering of texture view layers may be applied symmetrically for multiple (for example, two, three, four, and so on) texture views. For example, the same selection of depth layers and filtering parameters may be made in all texture pictures of the same time instant, where the texture pictures represent different views.

In an embodiment, the filtering of texture view layers may be applied independently for each of multiple (for example, two, three, four, and so on) texture views. For example, the selection of depth layers for a depth view, texture view layers for a respective texture view and filtering parameters for texture view layers may be made by processing the texture picture and depth pictures of the same view.

One branch of research for obtaining compression improvement in stereoscopic video is known as asymmetric stereoscopic video coding, in which there is a quality difference between the two coded views. This is attributed to the widely believed assumption that the Human Visual System (HVS) fuses the stereoscopic image pair such that the perceived quality is close to that of the higher quality view. Thus, compression improvement may be obtained by providing a quality difference between the two coded views.

Asymmetry between the two views may be achieved, for example, by one or more of the methods, such as Mixed-resolution (MR) stereoscopic video coding, Mixed-resolution chroma sampling, Asymmetric sample-domain quantization, Asymmetric transform-domain quantization, Mixed temporal resolution, and a combination thereof.

Mixed-resolution (MR) stereoscopic video coding may also be referred to as resolution-asymmetric stereoscopic video coding. In MR stereoscopic video coding, one of the views may be low-pass filtered and hence may have a smaller amount of spatial details or a lower spatial resolution. Furthermore, the low-pass filtered view may be sampled with a coarser sampling grid, i.e., represented by fewer pixels.

In mixed-resolution chroma sampling, the chroma pictures of one view are represented by fewer samples than the respective chroma pictures of the other view. In asymmetric sample-domain quantization, the sample values of the two with a different step size. For example, the luma samples of one view may be represented with the range of 0 to 255 (i.e., 8 bits per sample) while the range may be scaled to the range of 0 to 159 for the second view. Thanks to fewer quantization steps, the second view can be compressed with a higher ratio compared to the first view. Different quantization step sizes may be used for luma and chroma samples. As a special case of asymmetric sample-domain quantization, one can refer to bit-depth-asymmetric stereoscopic video when the number of quantization steps in each view matches a power of two. In asymmetric transform-domain quantization, the transform coefficients of the two views are quantized with a different step size. As a result, one of the views has a lower fidelity and may be subject to a greater amount of visible coding artifacts, such as blocking and ringing. The mixed temporal resolution (i.e., different picture rate) may be performed between views.

It needs to be understood that asymmetric multiview video with more than two views may be realized similarly to asymmetric stereoscopic video. In an example, three texture views may be included in a multiview signal and the center texture view may have a better quality than the side texture views.

In an embodiment, the filtering may be applied to a subset of texture views of multiple texture views, such as two, three, four, etc. texture views. For example, the filtering may be applied to one of the two texture views.

In an embodiment, the filtering of texture view layers may be applied asymmetrically between at least two views among multiple texture views, such as two, three, four, etc. texture views. For example, the selection of depth layers for a first depth view and a second depth view, texture view layers for a respective first texture view and for a respective second texture view, and/or filtering parameters for the texture view layers of the first texture view and for the texture view layers of the second texture view result in filtering being applied in different objects and/or different types of filtering being applied and/or different magnitude of filtering being applied between the first and second texture views. For example, a first texture view may be smoothed or low-pass-filtered more than a second texture view. The filtered texture views may be encoded with a multiview encoder, such as a MVC encoder or alike, and/or decoded with a multiview decoder, such as a MVC decoder or alike. In an example embodiment, the first texture picture and the second texture picture may jointly represent a stereoscopic picture.

In some embodiments, other types of asymmetric stereoscopic and/or multiview video may be combined with asymmetric filtering and/or filtering a subset of the texture views. For example, the filtered texture views may be coded with a smaller spatial resolution than the texture views that are not filtered. In another example, the texture views that are not filtered are processed, e.g. their sample values may be quantized more coarsely than the sample values of the filtered views.

In an embodiment, filtered pictures of a first texture view may be encoded as a base layer of a scalable video bitstream and unfiltered pictures of the first texture view may be encoded as an enhancement layer of the scalable video bitstream. Furthermore, filtered pictures of a second texture view may be encoded as another layer of the scalable video bitstream. Likewise, filtered pictures of a first texture view may be decoded from a base layer of a scalable video bitstream and unfiltered pictures of the first texture view may be decoded from an enhancement layer of the scalable video bitstream. Furthermore, filtered pictures of a second texture view may be decoded from another layer of the scalable video bitstream. In some embodiments, said another layer may be predicted (e.g. inter-layer and/or inter-view predicted) from the base layer as part of the encoding and/or decoding. In some embodiments, said another layer may be predicted (e.g. inter-layer and/or inter-view predicted) from the enhancement layer as part of the encoding and/or decoding.

In an embodiment, filtered pictures of a first texture view may be encoded as a base layer of a scalable video bitstream and unfiltered pictures of the first texture view may be encoded as an enhancement layer of the scalable video bitstream. Furthermore, unfiltered pictures of a second texture view may be encoded as another layer of the scalable video bitstream. Likewise, filtered pictures of a first texture view may be decoded from a base layer of a scalable video bitstream and unfiltered pictures of the first texture view may be decoded from an enhancement layer of the scalable video bitstream. Furthermore, unfiltered pictures of a second texture view may be decoded from another layer of the scalable video bitstream. In some embodiments, said another layer may be predicted (e.g. inter-layer and/or inter-view predicted) from the base layer as part of the encoding and/or decoding. In some embodiments, said another layer may be predicted (e.g. inter-layer and/or inter-view predicted) from the enhancement layer as part of the encoding and/or decoding.

In an embodiment, filtered pictures of a first texture view may be encoded as a first layer of a scalable video bitstream and unfiltered pictures of the first texture view may be encoded as an enhancement layer (for the first layer) of the scalable video bitstream. Furthermore, unfiltered pictures of a second texture view may be encoded as the base layer of the scalable video bitstream. Likewise, filtered pictures of a first texture view may be decoded from a first layer of a scalable video bitstream and unfiltered pictures of the first texture view may be decoded from an enhancement layer (for the first layer) of the scalable video bitstream. Furthermore, unfiltered pictures of a second texture view may be decoded from the base layer of the scalable video bitstream. In some embodiments, the first layer may be predicted (e.g. inter-layer and/or inter-view predicted) from the base layer as part of the encoding and/or decoding. In some embodiments, the enhancement layer may be predicted (e.g. inter-layer and/or inter-view predicted) from the base layer as part of the encoding and/or decoding.

In some embodiments, unfiltered pictures of a second texture view may be encoded a second enhancement layer of the scalable video bitstream of some of the previous embodiments where filtered pictures of the second texture view are coded as a layer of the scalable video bitstream. Likewise, unfiltered pictures of a second texture view may be decoded from a second enhancement layer of the scalable video bitstream of some of the previous embodiments where filtered pictures of the second texture view are coded as a layer of the scalable video bitstream. In some embodiments, the second enhancement layer may be predicted (e.g. inter-layer and/or inter-view predicted), as part of the encoding and/or decoding, from one or more of the base layer, the enhancement layer and the layer of the filtered pictures of the second texture view.

In some embodiments, depth views may be utilized in deriving depth layers and hence indirectly in the filtering of texture view layers, while the depth views may not be encoded and/or decoded. In other words, in some embodiments one or more texture views are encoded and/or decoded. In some embodiments, depth views may be utilized in deriving depth layers and hence indirectly in the filtering of texture view layers, and the depth views may also be encoded and/or decoded. In other words, in some embodiments one or more texture views may be encoded and/or decoded, and one or more depth views may also be encoded and/or decoded. The coded texture and depth views may reside in one or more bitstreams. For example, an encoder may encode texture and depth views into a bitstream conforming to the multiview and depth video coding (MVC+D) amendment of H.264/AVC, and a decoder may decode texture and depth views according to MVC+D decoding process from an MVC+D bitstream.

In a frame-compatible or frame-packed stereoscopic video, a spatial packing of a stereo pair into a single frame may be performed at the encoder side as a pre-processing step for encoding and then the frame-packed frames are encoded with a conventional 2D video coding scheme. The output frames produced by the decoder may contain constituent frames of a stereo pair.

In some embodiments, two texture views processed according to any embodiment may be encoded into a frame-packed video bitstream or decoded from a frame-packed video bitstream. In some embodiments, a texture view processed according to any embodiment and a depth view may be encoded into a frame-packed video bitstream or decoded from a frame-packed video bitstream. In some embodiments, more than two pictures may be packed into the same frame, where the more than two pictures may represent texture pictures and/or depth pictures, where at least some of the packed pictures may be processed according to any embodiment.

In an embodiment, a scalable video (or image) bitstream is received or accessed, wherein the scalable video (or image) bitstream comprises a coded second picture in a base layer and a coded first picture in an enhancement layer. The coded second picture is decoded. The coded first picture is decoded, where in the decoding may include prediction from the second coded picture and/or the second decoded picture. For example, the second decoded picture may be included in a reference picture list of the first picture and may be used as a reference picture in the inter prediction process. An example multimedia communication system within which various embodiments may be implemented is illustrated and explained with reference to FIGURE 5.

FIGURE 5 is a graphical representation of an example multimedia communication system within which various embodiments may be implemented. A data source 510 provides a source signal in an analog, uncompressed digital, or compressed digital format, or any combination of these formats. An encoder 520 may include or be connected with a pre-processing, such as data format conversion and/or filtering of the source signal. The encoder 520 encodes the source signal into a coded media bitstream. It should be noted that a bitstream to be decoded may be received directly or indirectly from a remote device located within virtually any type of network. Additionally, the bitstream may be received from local hardware or software. The encoder 520 may be capable of encoding more than one media type, such as audio and video, or more than one encoder 520 may be required to code different media types of the source signal. The encoder 520 may also get synthetically produced input, such as graphics and text, or it may be capable of producing coded bitstreams of synthetic media. In the following, only processing of one coded media bitstream of one media type is considered to simplify the description. It should be noted, however, that typically real-time broadcast services comprise several streams (typically at least one audio, video and text sub-titling stream). It should also be noted that the system may include many encoders, but in Figure 5 only one encoder 520 is represented to simplify the description without a lack of generality. It should be further understood that, although text and examples contained herein may specifically describe an encoding process, one skilled in the art would understand that the same concepts and principles also apply to the corresponding decoding process and vice versa.

The coded media bitstream may be transferred to a storage 530. The storage 530 may comprise any type of mass memory to store the coded media bitstream. The format of the coded media bitstream in the storage 530 may be an elementary self-contained bitstream format, or one or more coded media bitstreams may be encapsulated into a container file. If one or more media bitstreams are encapsulated in a container file, a file generator (not shown in the figure) may be used to store the one more media bitstreams in the file and create file format metadata, which may also be stored in the file. The encoder 520 or the storage 530 may comprise the file generator, or the file generator is operationally attached to either the encoder 520 or the storage 530. Some systems operate "live", i.e. omit storage and transfer coded media bitstream from the encoder 520 directly to the sender 540. The coded media bitstream may then be transferred to the sender 540, also referred to as the server, on a need basis. The format used in the transmission may be an elementary self-contained bitstream format, a packet stream format, or one or more coded media bitstreams may be encapsulated into a container file. The encoder 520, the storage 530, and the server 540 may reside in the same physical device or they may be included in separate devices. The encoder 520 and server 540 may operate with live real-time content, in which case the coded media bitstream is typically not stored permanently, but rather buffered for small periods of time in the content encoder 520 and/or in the server 540 to smooth out variations in processing delay, transfer delay, and coded media bitrate.

The server 540 sends the coded media bitstream using a communication protocol stack. The stack may include but is not limited to one or more of Real-Time Transport Protocol (RTP), User Datagram Protocol (UDP), Hypertext Transfer Protocol (HTTP), Transmission Control Protocol (TCP), and Internet Protocol (IP). When the communication protocol stack is packet-oriented, the server 540 encapsulates the coded media bitstream into packets. For example, when RTP is used, the server 540 encapsulates the coded media bitstream into RTP packets according to an RTP payload format. Typically, each media type has a dedicated RTP payload format. It should be again noted that a system may contain more than one server 540, but for the sake of simplicity, the following description only considers one server 540.

If the media content is encapsulated in a container file for the storage 530 or for inputting the data to the sender 540, the sender 540 may comprise or be operationally attached to a "sending file parser" (not shown in the figure). In particular, if the container file is not transmitted as such but at least one of the contained coded media bitstream is encapsulated for transport over a communication protocol, a sending file parser locates appropriate parts of the coded media bitstream to be conveyed over the communication protocol. The sending file parser may also help in creating the correct format for the communication protocol, such as packet headers and payloads. The multimedia container file may contain encapsulation instructions, such as hint tracks in the ISO Base Media File Format, for encapsulation of the at least one of the contained media bitstream on the communication protocol.

The server 540 may or may not be connected to a gateway 550through a communication network. It is noted that the system may generally comprise any number gateways or alike, but for the sake of simplicity, the following description only considers one gateway 550. The gateway 550 may perform different types of functions, such as translation of a packet stream according to one communication protocol stack to another communication protocol stack, merging and forking of data streams, and manipulation of data stream according to the downlink and/or receiver capabilities, such as controlling the bit rate of the forwarded stream according to prevailing downlink network conditions. Examples of gateways 550include multipoint conference control units (MCUs), gateways between circuit-switched and packet-switched video telephony, Push-to-talk over Cellular (PoC) servers, IP encapsulators in digital video broadcasting-handheld (DVB-H) systems, or set-top boxes or other devices that forward broadcast transmissions locally to home wireless networks. When RTP is used, the gateway 550 may be called an RTP mixer or an RTP translator and may act as an endpoint of an RTP connection.

The system includes one or more receivers 560, typically capable of receiving, de-modulating, and de-capsulating the transmitted signal into a coded media bitstream. The coded media bitstream may be transferred to a recording storage 570. The recording storage 570 may comprise any type of mass memory to store the coded media bitstream. The recording storage 570 may alternatively or additively comprise computation memory, such as random access memory. The format of the coded media bitstream in the recording storage 570 may be an elementary self-contained bitstream format, or one or more coded media bitstreams may be encapsulated into a container file. If there are multiple coded media bitstreams, such as an audio stream and a video stream, associated with each other, a container file is typically used and the receiver 560 comprises or is attached to a container file generator producing a container file from input streams. Some systems operate "live," i.e. omit the recording storage 570 and transfer coded media bitstream from the receiver 560 directly to a decoder 580. In some systems, only the most recent part of the recorded stream, e.g.,

the most recent 10-minute excerption of the recorded stream, is maintained in the recording storage 570, while any earlier recorded data is discarded from the recording storage 570.

The coded media bitstream may be transferred from the recording storage 570 to the decoder 580. If there are many coded media bitstreams, such as an audio stream and a video stream, associated with each other and encapsulated into a container file or a single media bitstream is encapsulated in a container file e.g. for easier access, a file parser (not shown in the figure) is used to decapsulate each coded media bitstream from the container file. The recording storage 570 or the decoder 580 may comprise the file parser, or the file parser is attached to either recording storage 570 or the decoder 580. It should also be noted that the system may include many decoders, but here only one decoder 580 is discussed to simplify the description without a lack of generality

The coded media bitstream may be processed further by a decoder 580, whose output is one or more uncompressed media streams. Finally, a renderer 590 may reproduce the uncompressed media streams with a loudspeaker or a display, for example. The receiver 560, recording storage 570, decoder 580, and renderer 590 may reside in the same physical device or they may be included in separate devices.

The sender 540 according to various embodiments may be configured to select the transmitted layers of a scalable video bitstream for multiple reasons, such as to respond to requests of the receiver 560 or prevailing conditions of the network over which the bitstream is conveyed. A request from the receiver 560 can be, e.g., a request for a change of transmitted scalability layers or a change of a rendering device having different capabilities compared to the previous one.

The receiver 560 may comprise a proximity detector or may be able to receive signals from a separate proximity detector to determine the distance of the viewer from the display and/or the position of the head of the viewer. On the basis of this distance determination the receiver 560 may instruct the decoder 580 to change the number of scalable layers representing different filtering levels. For example, only the base layer may be requested to be transmitted, if a viewer is relatively far away from the display and hence unlikely to be able to see and/or unlikely to pay attention to details on texture view layers corresponding to background depth layers.

In some embodiments, the receiver 560 may communicate with the encoder 520 to inform the encoder 520 that filtering can be adapted based on the distance of the viewer from the display. Such communication may take place for example when encoding is taking place in real-time e.g. in a video telephone or conferencing connection.

In one example embodiment the proximity detector is implemented by using a front-facing camera of the receiving device and analyzing the image signal from the camera to determine the distance and/or the head position of the viewer.

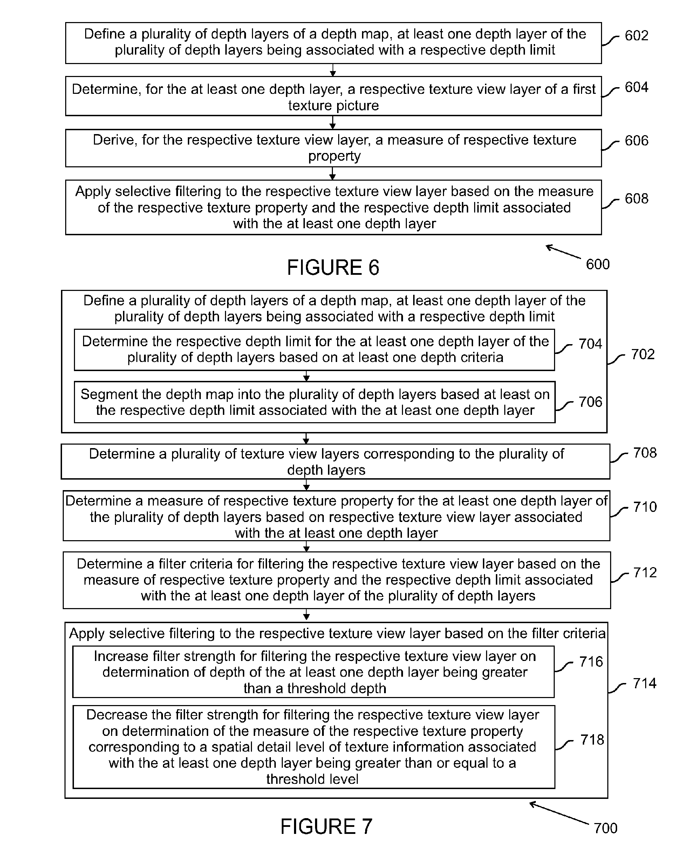

Some example embodiments of performing depth and texture based filtering are further described with reference to FIGURES 6 and 7. FIGURES 6 and 7 are provided for the representation of an example only, and should not be considered limiting to the scope of the various example embodiments.

FIGURE 6 is a flowchart depicting an example method 600 for filtering of media content, in accordance with an example embodiment. Example references of the FIGURES 1A to 5 may be made for the description of the method 600. The method 600 depicted in the flowchart may be executed by, for example, the apparatus 300 of FIGURE 3.

At 602, the method 600 includes defining a plurality of depth layers of a depth map. An example of the plurality of depth layers is illustrated and explained with reference to FIGURE 4. In an embodiment, at least one depth layer of the plurality of depth layers may be associated with a respective depth limit. In an embodiment, the plurality of depth layers may be defined by segmenting the depth map into plurality of depth intervals based on a distance of respective depth layer from a reference location. In an embodiment, the reference location may include a camera location from where the media content is captured.

At 604, the method includes determining, for the at least one depth layer, a respective texture view layer of a first picture. At block 606, the respective texture view layer may be processed to obtain a measure of a respective texture property associated with the at least one depth layer. In an example embodiment, the measure of the respective texture property associated with the at least one depth layer of the plurality of depth layers may include a frequency analysis information associated with the at least one depth layer. For example, the texture property measure associated with the at least one depth layer may include an information associated with high frequency components of the at least one depth layer.

At 608, the method includes applying selective filtering to the at least one texture view layer based on the respective texture property measure and the respective depth limit. In an example embodiment, the selective filtering of the at least one texture view layer may refer to usage of different filters associated with distinct features such as window size for filtering, characteristics, structures, strengths and the like for filtering different texture view layers. In an embodiment, the selection of a filter for performing filtering of the at least one texture view layer may be performed based on the depth limit associated with the at least one depth layer and the respective texture property measure associated with the at least one depth layer. Any type of filtering may be used with various embodiments.

FIGURE 7 is a flowchart depicting an example method 700 for filtering of media content, in accordance with another example embodiment. Example references are made to FIGURES 2 to 5 for the description of the method 700.

The method 700 depicted in the flowchart may be executed by, for example, the apparatus 300 of FIGURE 3.

In an embodiment, media content such as video content associated with a scene may be accessed. For example, the media content may be a video recording scene depicting a person walking in a room. In an example embodiment, the media content may include a sequence of pictures or frames. In an embodiment, the sequence of pictures or frames may include, for example a first image and a second image. In an embodiment, at least one depth map may be generated based on the sequence of pictures or frames. For example, a depth map may be generated based on the first image and the second image of the video sequence.

At 702, a plurality of depth layers of the depth map may be defined. In an embodiment, the plurality of depth layers may be defined such that at least one depth layer of the plurality of depth layers is associated with a respective depth limit. In an embodiment, the plurality of depth layers of the depth map may be defined based on a method described by 704 and 706. For example, at 704, the respective depth limit for the at least one depth layer of the plurality of depth layers may be determined based on at least one depth criteria. In an embodiment, the at least one depth criteria includes one or more of a differential value of depth, mean value of depth, median value of depth, and histogram based value of depth associated with the at least one depth layer. At 706, the depth map may be segmented into the plurality of depth layers based at least on the respective depth limit associated with the at least one depth layer of the plurality of depth layers and the depth criteria.

In an embodiment, wherein the depth criteria includes the differential value of depth, the plurality of depth layers of the depth map may be defined by determining depth interval of the depth map based on the differential value of depth. In an embodiment, the differential value of depth is determined based on a minimum depth value and a maximum depth value associated with the depth map. In an embodiment, at least a portion of the depth interval may be partitioned into a plurality of intervals to define the plurality of depth layers. For example, a portion of the depth interval that is associated with a depth less than a threshold depth may be partitioned into the plurality of intervals. In an alternate embodiment, the entire depth interval may be partitioned into the plurality of intervals.

In an embodiment, wherein the depth criteria includes the mean value of depth, the plurality of depth layers of the depth map may be defined by determining depth interval of the depth map based on the mean value of the depth. In an embodiment, defining the plurality of depth layers of the depth map includes determining depth interval of the depth map based on a minimum depth value and a maximum depth value associated with the depth map. In an embodiment, the mean value of depth of the depth map is determined based on depth values associated with the depth map. The at least one portion of the depth interval may be partitioned into multiple depth intervals based on the mean value of depth, and each of the multiple depth intervals may further be partitioned into a plurality of intervals to define the plurality of depth layers. For example, a portion of the depth interval that is associated with a depth less than a threshold depth may be partitioning into the plurality of intervals. In an alternate embodiment, the entire depth interval may be partitioned into the plurality of intervals.

In an embodiment, wherein the depth criteria includes the median value of depth, the plurality of depth layers of the depth map may be defined by determining depth interval of the depth map based on the median value of the depth. In an embodiment, defining the plurality of depth layers of the depth map includes determining depth interval of the depth map based on a minimum depth value and a maximum depth value associated with the depth map. In an embodiment, the median value of depth of the depth map may be determined based on depth values associated with the depth map. In an embodiment, at least one portion of the depth interval may be partitioned into multiple depth intervals based on the median value of depth, and each of the multiple depth intervals may be partitioned into the plurality of intervals to define the plurality of depth layers. For example, a portion of the depth interval that is associated with a depth less than a threshold depth may be partitioning into the plurality of intervals. In an alternate embodiment, the entire depth interval may be partitioned into the plurality of intervals.

In an embodiment, wherein the depth criteria includes the histogram based value of depth, the plurality of depth layers of the depth map may be defined by determining a histogram of depth values associated with the depth map. In an embodiment, the histogram is representative of a number of pixels associated with the depth values. In an example embodiment, a histogram $H(x)$ of the depth map may be generated such that the x-axis represents the sample depth values and the y-axis represents the number of pixels having the depth values represented on x-axis. In an example embodiment, depth values represented on x-axis may be divided into N contiguous intervals such that the number of pixels in each segment is approximately equal. In the present embodiment, the image is divided into N depth segments where each layer occupies $1/N^{th}$ of the total area of the image. In another example embodiment, instead of dividing the depth values represented on x-axis into N intervals, only a portion of the depth interval less than or equal to a threshold depth interval may be divided into N intervals. The present embodiment may be advantageous in applications where it is necessary to keep the objects close to the camera intact, for example, in video conferencing and defining such depth right behind the depth value for a face portion of the attendee.

In an embodiment, the plurality of depth layers of the depth map may be defined based on a combination of one or more of the depth criteria, for example, differential value of depth, mean value of depth, median value of depth, and histogram based value of depth, as explained above.

At 708, a plurality of texture view layers corresponding to the plurality of depth layers may be determined. In an example embodiment, the plurality of texture view layers may be determined by mapping the plurality of depth layers to respective texture views layers. In an example embodiment, a texture view may include texture information representative of luminance (brightness or intensity) and chrominance (color, e.g., blue hues and red hues) of the image. In an example embodiment, the plurality of texture view layers may be generated by partitioning the texture image associated with the media content into the plurality of depth layers or segments corresponding to the plurality of depth layers. An example of the texture view layers corresponding to the plurality of depth layers is illustrated and explained further with reference to FIGURE 4.

At 710, a measure of respective texture property for at least one depth layer of the plurality of depth layers may be determined based on a respective texture view layer associated with the at least one depth layer. In an embodiment, the measure of the respective texture property for the depth layers may be determined by transferring the sample values of texture information to frequency domain, and computing an absolute value of DCT corresponding to the at least one depth layers. For example, the absolute value of DCT may be computed for the plurality of depth layers. In an embodiment, the value of DCT corresponding to the plurality of depth layers may be utilized for determining a spatial detail level of texture information, for example, high frequency components (HFCs) of the image. In an embodiment, the high frequency components corresponding to each of the plurality of depth layers (N) may be computed, for example $HFC_1$, $HFC_2$, ... , $HFC_N$ respective to layers (depth segments and/or layers of texture view) 1 to N.

At 712, filter criteria for the plurality of texture view layers may be determined for filtering corresponding texture view layer of the plurality of texture view layers. In an example embodiment, the filter criteria may be determined based on the respective texture property measure and the respective depth limit associated with the at least one depth layer. At 714, selective filtering may be applied to the respective texture view layer based on the depth criteria. For example, on determination of depth of the at least one depth layer being greater than a threshold depth, the filter strength may be increased for the at least one texture view layer, at 716. In an embodiment, the filter strength may be decreased on determination of the respective texture property measure corresponding to a spatial detail level of texture information being greater than the threshold level, at 718. In an embodiment, the filtering of the depth layers and/ or texture view layers may be performed as pre-processing for encoding. In an embodiment, due to the filtering of the depth layers and/ or texture view layers, the compression efficiency is improved, i.e. a smaller bitrate can be used to achieve the same subjective quality than in a coding scheme without said filtering.

Herein, it will be noted that various filter designs may be utilized for facilitating filtering of the texture view layers. In many embodiments, a low-pass filter (LPF) may be used to reduce the amount and/or magnitude of HFCs. In an embodiment, a Gaussian low-pass filter can be used. In an embodiment, a Gaussian low-pass filter may be designed with two parameters, namely, size and standard deviation, which may be labeled with the character sigma. Herein, size may refer to the size of the square matrix representing the filter. The selection of the parameters, size and standard deviation, may be done manually or at least in parts automatically based on $HFC_{1...N}$ values and the number of respective layers. To automate the filter design, a series of functions such as ($f_1()$, $f_2()$, ... fn()) for each layer may be used to calculate the filter characteristics based on the HFC of respective layer in texture view. It will be noted that the functions might be totally different or follow a same trend between the layers based on the layer index. The filter criteria selection may be as shown below:

$$\text{Filter criteria} = \begin{cases} [size_1, STD_1] & = F_1(HFC_1) \\ [size_2, STD_2] & = F_2(HFC_2) \\ \quad \cdot \\ \quad \cdot \\ \quad \cdot \\ [size_N, STD_N] & = F_N(HFC_N) \end{cases} \text{----------------------------------------} (4)$$

where, $size_1$, $size_2$......$size_N$, refers to the size of the respective square matrices representing the filters;
$STD_1$, $STD_2$,.... $STD_N$, refers to the standard deviation, and
$F_1(HFC_1)$, $F_2(HFC_2)$, ......$F_N(HFC_N)$ refers to the functions for layers 1, 2...N, respectively.

A category of stereoscopic displays is based on polarization and requires glasses with polarized lenses that filter images associated to each eye to produce a 3D sensation. This type of a display may also be referred as a passive stereoscopic display. In row-interlaced polarized displays, each view is represented with half vertical resolution compared to the full vertical resolution of the screen. For example, odd pixel rows might be of a particular polarity, while even pixel rows are then of the orthogonal polarity. Hence, since the vertical spatial resolution of the polarized display may be divided between the left and right views, the perceived spatial resolution of each view may half of the actual vertical resolution of the screen or of the displaying window within the screen. The polarizing filters for each eye has the target impact that only that view is perceived by the respective eye and, thus, each eye sees a different subset of the pixels and hence perceives different pictures.

In an example embodiment, the filtering of the texture view layers facilitates in removing potential aliasing perceived on row-interlaced polarized stereoscopic displays due to half down-sampling of left and right texture views.

In an example embodiment, a second texture picture may be received such that the first texture picture and the second texture picture may jointly represent a stereoscopic picture. In an example embodiment, the second texture picture may be generated on applying the selective filtering to the respective texture view layer associated with the first texture picture. In an example embodiment, the second texture picture may be encoded in a base layer of a scalable bitstream. In an example embodiment, the first texture picture may be encoded in an enhancement layer of the scalable bitstream. In an example embodiment, the encoded second texture picture may be decoded from the base layer of the scalable bitstream. In an example embodiment, the encoded first texture picture may be decoded from the enhancement layer of the scalable bitstream. The scalable bit-stream and the encoding and decoding of the first texture picture and the second texture picture is already explained with reference to FIGURE 4.

It should be noted that to facilitate discussions of the flowcharts of FIGURES 6 to 7, certain operations are described herein as constituting distinct steps performed in a certain order. Such implementations are examples only and non-limiting in scope. Certain operation may be grouped together and performed in a single operation, and certain operations can be performed in an order that differs from the order employed in the examples set forth herein. Moreover, certain operations of the methods 600 and 700 may be performed in an automated fashion. These operations may involve substantially no interaction with the user. Other operations of the methods 600 and 700 may be performed by in a manual fashion or semi-automatic fashion. These operations may involve interaction with the user via one or more user interface presentations.

The methods depicted in these flow charts may be executed by, for example, the apparatus 300 of FIGURE 3. Operations of the flowchart, and combinations of operation in the flowcharts, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of an apparatus and executed by at least one processor in the apparatus. Any such computer program instructions may be loaded onto a computer or other programmable apparatus (for example, hardware) to produce a machine, such that the resulting computer or other programmable apparatus embody means for implementing the operations specified in the flowchart. These computer program instructions may also be stored in a computer-readable storage memory (as opposed to a transmission medium such as a carrier wave or electromagnetic signal) that may direct a computer or other programmable apparatus to function in a particular manner, such that the instructions stored in the computer-readable memory produce an article of manufacture the execution of which implements the operations specified in the flowchart. The computer program instructions may also be loaded onto a computer or other programmable apparatus to cause a series of operations to be performed on the computer or other programmable apparatus to produce a computer-implemented process such that the instructions, which execute on the computer or other programmable apparatus, provide operations for implementing the operations in the flowchart. The operations of the methods are described with help of apparatus 300. However, the operations of the methods can be described and/or practiced by using any other apparatus.

It needs to be understood that while various embodiments have been described with reference to video content, embodiments could similarly be realized with other types of visual content, such as still images, image bursts or image sequences, and/or animations.

Without in any way limiting the scope, interpretation, or application of the claims appearing below, a technical effect of one or more of the example embodiments disclosed herein is to filter the media content by segmenting a depth map associated with the media content into a plurality of depth layers, and perform filtering of the plurality of depth layers based on the high frequency components associated with the respective depth layers of the plurality of depth layers. Various embodiments disclose techniques for partitioning the depth map into the plurality of depth layers. In an embodiment, the filtering the depth layers based on the high frequency components associated with the corresponding texture view layers may be performed as pre-processing of encoding. The filtering of depth layers has the advantage that the compression efficiency may be improved, i.e. a smaller bitrate can be used to achieve the same subjective quality than in a coding scheme without said filtering.

Various embodiments described above may be implemented in software, hardware, application logic or a combination of software, hardware and application logic. The software, application logic and/or hardware may reside on at least one memory, at least one processor, an apparatus or, a computer program product. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of an apparatus described and depicted in FIGURES 2 and/or 3. A computer-readable medium may comprise a non-transitory computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present disclosure as defined in the appended claims.

**Claims**

1. A method comprising:

   defining a plurality of depth layers of a depth map, at least one depth layer of the plurality of depth layers being associated with a respective depth limit;
   determining, for the at least one depth layer, a respective texture view layer of a first texture picture;
   deriving, for the respective texture view layer, a measure of a respective texture property; and
   applying selective filtering to the respective texture view layer based on the measure of the respective texture property and the respective depth limit associated with the at least one depth layer.

2. The method as claimed in claim 1, wherein defining the plurality of depth layers of the depth map comprises:

   determining the respective depth limit for the at least one depth layer of the plurality of depth layers based on at least one depth criteria; and
   segmenting the depth map into the plurality of depth layers based at least on the respective depth limit associated with the at least one depth layer of the plurality of depth layers.

3. The method as claimed in claim 2, wherein the at least one depth criteria comprises one or more of a differential value of depth, mean value of depth, median value of depth, and histogram based value of depth.

4. The method as claimed in claim 3, wherein defining the plurality of depth layers of the depth map comprises:

   determining depth interval of the depth map based on the differential value of depth, the differential value of depth being determined based on a minimum depth value and a maximum depth value associated with the depth map; and
   partitioning at least a portion of the depth interval into a plurality of intervals to define the plurality of depth layers.

5. The method as claimed in claim 3, wherein defining the plurality of depth layers of the depth map comprises:

   determining depth interval of the depth map based on a minimum depth value and a maximum depth value associated with the depth map;
   determining the mean value of depth of the depth map based on depth values associated with the depth map;
   partitioning at least one portion of the depth interval into multiple depth intervals based on the mean value of depth; and
   partitioning each of the multiple depth intervals into a plurality of intervals to define the plurality of depth layers.

6. The method as claimed in claim 3, wherein defining the plurality of depth layers of the depth map comprises:

   determining depth interval of the depth map based on a minimum depth value and a maximum depth value associated with the depth map;
   determining the median value of depth of the depth map based on depth values associated with the depth map;
   partitioning at least one portion of the depth interval into multiple depth intervals based on the median value of depth; and

partitioning each of the multiple depth intervals into a plurality of intervals to define the plurality of depth layers.

7. The method as claimed in claim 3, wherein defining the plurality of depth layers of the depth map comprises:

   determining a histogram of depth values associated with the depth map, the histogram being representative of a number of pixels associated with a plurality of depth values of the depth map; and
   partitioning a depth interval of the depth map into a plurality of intervals comprising substantially equal number of pixels, the plurality of intervals being associated with the plurality of depth layers of the depth map.

8. The method as claimed in claim 1, further comprising deriving the measure of respective texture property based on frequency-domain characteristics of the respective texture view layer.

9. The method as claimed in claim 1, further comprising receiving a second texture picture, the first texture picture and the second texture picture jointly representing a stereoscopic picture.

10. The method as claimed in claim 9, further comprising:

    encoding the second texture picture in a base layer of a scalable bitstream, the second texture picture being generated on applying the selective filtering to the respective texture view layer associated with the first texture picture; and
    encoding the first texture picture in an enhancement layer of the scalable bitstream.

11. The method as claimed in claim 10, further comprising:

    decoding the encoded second texture picture from the base layer of the scalable bitstream; and
    decoding the encoded first texture picture from the enhancement layer of the scalable bitstream.

12. The method as claimed in claims 10 or 11, further comprising applying prediction from the encoded second texture picture in at least one of the encoding and the decoding of the first texture picture.

13. The method as claimed in claim 9, further comprising filtering the second texture picture asymmetrically with the filtering of the respective texture view layer of the first texture picture.

14. The method as claimed in any of claims 1 to 13, wherein applying selective filtering to the respective texture view layer comprises manipulating a filter strength for performing filtering of the respective texture view layer based on the measure of the respective texture property and the respective depth limit associated with the at least one depth layer.

15. An apparatus configured to perform the method according to any of Claims 1 to 14.

FIGURE 1A

FIGURE 1B

Camera Module 222

202

204

206

210

212

214

Controller 208

Display 216

Keypad 218

220

Volatile Memory 226

Non-Volatile Memory 228

User Identity Module 224

200

FIGURE 2

310

User Interface 306

302 Processor

Image sensor 308

304 Memory

300

FIGURE 3

FIGURE 4

FIGURE 5

Define a plurality of depth layers of a depth map, at least one depth layer of the plurality of depth layers being associated with a respective depth limit ⟋ 602

Determine, for the at least one depth layer, a respective texture view layer of a first texture picture ⟋ 604

Derive, for the respective texture view layer, a measure of respective texture property ⟋ 606

Apply selective filtering to the respective texture view layer based on the measure of the respective texture property and the respective depth limit associated with the at least one depth layer ⟋ 608

## FIGURE 6    ↖ 600

Define a plurality of depth layers of a depth map, at least one depth layer of the plurality of depth layers being associated with a respective depth limit

 Determine the respective depth limit for the at least one depth layer of the plurality of depth layers based on at least one depth criteria ⟋ 704

 Segment the depth map into the plurality of depth layers based at least on the respective depth limit associated with the at least one depth layer ⟋ 706

⟋ 702

Determine a plurality of texture view layers corresponding to the plurality of depth layers ⟋ 708

Determine a measure of respective texture property for the at least one depth layer of the plurality of depth layers based on respective texture view layer associated with the at least one depth layer ⟋ 710

Determine a filter criteria for filtering the respective texture view layer based on the measure of respective texture property and the respective depth limit associated with the at least one depth layer of the plurality of depth layers ⟋ 712

Apply selective filtering to the respective texture view layer based on the filter criteria

 Increase filter strength for filtering the respective texture view layer on determination of depth of the at least one depth layer being greater than a threshold depth ⟋ 716

 Decrease the filter strength for filtering the respective texture view layer on determination of the measure of the respective texture property corresponding to a spatial detail level of texture information associated with the at least one depth layer being greater than or equal to a threshold level ⟋ 718

⟋ 714

## FIGURE 7    ↖ 700

Europäisches
Patentamt

European
Patent Office

Office européen
des brevets

# EUROPEAN SEARCH REPORT

Application Number

EP 15 15 8383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KARLSSON L S ET AL: "Region-of-Interest 3D Video Coding Based on Depth Images", 3DTV CONFERENCE: THE TRUE VISION - CAPTURE, TRANSMISSION AND DISPLAY OF 3D VIDEO, 2008, IEEE, PISCATAWAY, NJ, USA, 28 May 2008 (2008-05-28), pages 141-144, XP031275231, ISBN: 978-1-4244-1760-5 * the whole document * * abstract * * page 1, left-hand column, paragraph 1 * * page 1, right-hand column, paragraph 2 * * page 2, left-hand column, paragraph 2 * * page 2, right-hand column, paragraph 1 - paragraph 2 * * section 3.1 * | 1-15 | INV. G06T5/00 |
| A | Linda S Karlsson: "Spatio-temporal pre-processing methods for region-of-interest video coding", , 1 January 2007 (2007-01-01), XP055206203, Sundsvall ISBN: 978-9-18-531745-5 Retrieved from the Internet: URL:http://libris.kb.se/resource/bib/10405 302 [retrieved on 2015-08-04] * the whole document * * abstract * * section 3.2; page 24 - page 25 * | 1-15 | |
| | | | TECHNICAL FIELDS SEARCHED (IPC) |
| | | | G06T |

The present search report has been drawn up for all claims

| Place of search | Date of completion of the search | Examiner |
|---|---|---|
| Munich | 11 August 2015 | Zikic, Darko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 15 15 8383

The Search Division considers that the present European patent application does not comply with the
requirements of unity of invention and relates to several inventions or groups of inventions, namely:

```
    1. claims: 1-15

        All searchable claims

    1.1. claims: 1-9, 13-15

        Method for filtering regions of at least one texture picture
        based on depth and texture properties.

    1.2. claims: 10-12

        Method for decoding and encoding two texture pictures as a
        part of the multi-view plus depth representation.
                              ---

Please note that all inventions mentioned under item 1, although not
necessarily linked by a common inventive concept, could be searched
without effort justifying an additional fee.
```